(19) Europäisches Patentamt
European Patent Office
Office européen des brevets

(11) **EP 4 398 142 A1**

(12) **EUROPEAN PATENT APPLICATION**

(43) Date of publication:
**10.07.2024 Bulletin 2024/28**

(21) Application number: **24150181.6**

(22) Date of filing: **03.01.2024**

(51) International Patent Classification (IPC):
**G06F 40/174** (2020.01)    **G06F 40/30** (2020.01)
**G06N 20/00** (2019.01)

(52) Cooperative Patent Classification (CPC):
**G06F 40/174; G06F 40/30; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.01.2023 US 202318149873**

(71) Applicant: **UiPath, Inc.**
**New York NY 10017 (US)**

(72) Inventors:
• **DINES, Daniel**
  **New York, 10017 (US)**
• **VOICU, Cosmin**
  **New York, 10017 (US)**
• **LEONARD, Michael**
  **New York, 10017 (US)**

(74) Representative: **Ungria López, Javier**
  **Avda. Ramón y Cajal, 78**
  **28043 Madrid (ES)**

(54) **ARTIFICIAL INTELLIGENCE-DRIVEN, SEMANTIC, AUTOMATIC DATA TRANSFER BETWEEN A SOURCE AND A TARGET USING TASK MINING**

(57) Artificial intelligence (AI)-driven, semantic, automatic data transfer between a source and a target using task mining is disclosed. Existing task mining technologies gather all the data pertaining to a screen and/or form, along with the fields and elements present therein. However, semantic meaning may be derived and correlations between fields/elements on the screen may be provided automatically. This may include automatic transformation and validation, and a robotic process automation (RPA) workflow/automation can automatically be generated for a user that performs data copy-and-paste functionality between a source and a target without the user indicating those steps. Also, this functionality may be provided despite the fact that the labels in the source and the target are not exactly the same.

FIG. 7

EP 4 398 142 A1

**Description**

FIELD

The present invention generally relates to automation, and more specifically, to artificial intelligence (AI)-driven, semantic, automatic data transfer between a source and a target using task mining.

BACKGROUND

Currently, when a user wishes to run an unattended automation to copy information from a source to a target, he or she needs to specify the fields where the information is coming and the fields where the information will be copied to. However, users do not always understand this data manipulation between screens. Existing task mining technologies track low-level actions of the user for the purpose of determining tasks that the user is performing. However, it is difficult to evaluate this information, provide semantic understanding, and understand underlying correlations. Indeed, current task mining technologies do not do so.

Currently, processes that copy data from a source to a target have three general steps: (1) extraction of information from a data source (e.g., screen captures, recording key presses and mouse clicks, etc.); (2) transformation and validation (i.e., transforming the user interaction information and validating what was extracted); and (3) entering information into the target application. However, this process is not optimal and often requires input and confirmation from a user and/or a developer. Accordingly, an improved and/or alternative approach may be beneficial.

SUMMARY

Certain embodiments of the present invention may provide solutions to the problems and needs in the art that have not yet been fully identified, appreciated, or solved by current software automation technologies, and/or provide a useful alternative thereto. For example, some embodiments of the present invention pertain to artificial intelligence (AI)-driven, semantic, automatic data transfer between a source and a target using task mining. Certain embodiments may be employed for robotic process automation (RPA), for example.

In an embodiment, a non-transitory computer-readable medium stores a computer program. The computer program is configured to cause at least one processor to check for matches between values in a source and a target in a user interface (UI) using recorded data pertaining to user interactions with a computing system. The computer program is also configured to cause the at least one processor to validate the matches by identifying labels associated with fields comprising the value in the source and the target, providing the labels from the source and the target to a semantic matching AI/ML model as input, receive a matching score from the semantic matching AI/ML model as output, and check the matching score against a matching threshold.

In another embodiment, a computer-implemented method includes checking, by a computing system, for matches between values in a source and a target in a UI using recorded data pertaining to user interactions with a computing system. The computer-implemented method also includes validating the matches, by the computing system, by providing labels associated with fields comprising the matched values in the source and the target to a semantic matching AI/ML model as input, receiving a matching score from the semantic matching AI/ML model as output, and checking the matching score against a matching threshold. The computer-implemented method further includes automatically copying values associated with respective labels from the source to fields associated with corresponding semantically matched labels in the target where the matching score exceeds the matching threshold, by the computing system.

In yet another embodiment, a computing system includes memory storing computer program instructions and at least one processor configured to execute the computer program instructions. The computer program instructions are configured to cause the at least one processor to validate matches between values in a source and a target in a UI using recorded data pertaining to user interactions with the UI by providing labels associated with fields comprising the matched values in the source and the target to a semantic matching AI/ML model as input, receiving a matching score from the semantic matching AI/ML model as output, and checking the matching score against a matching threshold. The computer program instructions are configured to cause the at least one processor to automatically copy values associated with respective labels from the source to fields associated with corresponding semantically matched labels in the target where the matching score exceeds the matching threshold.

BRIEF DESCRIPTION OF THE DRAWINGS

In order that the advantages of certain embodiments of the invention will be readily understood, a more particular description of the invention briefly described above will be rendered by reference to specific embodiments that are illustrated in the appended drawings. While it should be understood that these drawings depict only typical embodiments of the invention and are not therefore to be considered to be limiting of its scope, the invention will be described and explained with additional specificity and detail through the use of the accompanying drawings, in which:

FIG. 1 is an architectural diagram illustrating a hyper-automation system, according to an embodiment of the present invention.

FIG. 2 is an architectural diagram illustrating an RPA system, according to an embodiment of the present invention.

FIG. 3 is an architectural diagram illustrating a deployed RPA system, according to an embodiment of the present invention.

FIG. 4 is an architectural diagram illustrating the relationship between a designer, activities, and drivers, according to an embodiment of the present invention.

FIG. 5 is an architectural diagram illustrating a computing system configured to perform AI-driven, semantic, automatic data transfer between a source and a target using task mining, according to an embodiment of the present invention.

FIG. 6A illustrates an example of a neural network that has been trained to recognize graphical elements in an image, according to an embodiment of the present invention.

FIG. 6B illustrates an example of a neuron, according to an embodiment of the present invention.

FIG. 7 is a flowchart illustrating a process for training AI/ML model(s), according to an embodiment of the present invention.

FIGS. 8A-G illustrate a semantic copy-and-paste operation performed from a source form to a target form and automatic RPA automation generation, according to an embodiment of the present invention.

FIG. 9 illustrates an RPA designer application with an automatically generated RPA workflow, according to an embodiment of the present invention.

FIG. 10 generally illustrates modules for performing AI-driven, semantic, automatic data transfer between a source and a target using task mining, according to an embodiment of the present invention.

FIG. 11 is a flowchart illustrating a process for performing AI-driven, semantic, automatic data transfer between a source and a target using task mining data as a source, according to an embodiment of the present invention.

Unless otherwise indicated, similar reference characters denote corresponding features consistently throughout the attached drawings.

## DETAILED DESCRIPTION OF THE EMBODIMENTS

Some embodiments pertain to AI-driven, semantic, automatic data transfer between a source and a target using task mining data as a source. Existing task mining technologies gather all the data pertaining to a screen and/or form, along with the fields and elements present therein. However, some embodiments go further, deriving semantic meaning and providing correlations between fields/elements on the screen automatically. This may include automatic transformation and validation, and an RPA workflow/automation can automatically be generated for a user that performs data copy-and-paste functionality between a source and a target without the user indicating those steps. Also, this functionality may be provided when the labels in the source and the target are not precisely the same.

In certain embodiments, a data source and a target screen are provided as inputs instead of element-by-element input for copying the information from one screen or form to another. Using AI, some embodiments can show semantic relationships between the source screen, form, or document and the target screen, form, or document, and the user can use suggested transformation tools to complete the suggested automation. In certain embodiments, if semantic matches are not found for one or more fields, the user may be prompted to complete the unmatched fields manually. Once the user provides this information, the transformation(s) are then learned, and the AI/ML model(s) are trained to understand these association(s) in the future.

By applying semantic understanding techniques to the task mining data, associations between the collected data and source and target labels can be learned. Such techniques may learn the mapping between the source and target fields, as well as potential data transformations that should be performed to make the data from the source compatible with the target. For instance, data may be changed to a different format if that is expected by the target (e.g., changing "October 14, 2022" to "14 October 2022").

Consider the case where a user copies information from a source screen or form to a target screen or form. If user only performs the task once or rarely, automation of this task may not be particularly beneficial. However, if the user performs the task with some frequency (e.g., monthly, weekly, daily, multiple times daily, etc.), this information can be determined from the task mining data with appropriately trained AI/ML model(s).

The order and/or steps of the task may not be the same each time, but the result of the process may be. For instance, the user may copy or enter data from the source into the fields of the target in a different order. Also, a different source or a different target may be used under certain conditions. Understanding whether the completed task is the same and/or understanding what the conditions for changing the source or target are may be add further benefit to the process that is eventually suggested to the user or automatically implemented, such as an RPA process.

To understand whether copy-and-paste tasks are the same, the result may be examined. For instance, most or all fields may have associated values in the last screen(s) for the target prior to when the user presses a "Submit" button, but the labels remain the same. This "completed" state may be indicative of a completed manual copy-and-paste operation regardless of the order in which the user populated the fields. As for understanding whether the source or the target should change, this may be determined from the source data. For instance, if the source data has a language field, this may indicate that a target associated with that language should be used. Many other scenarios are possible.

It should be noted that in some cases, a copy-and-paste operation may involve multiple screens from the source, the target, or both. Also, screens from multiple applications may be used for entry into screen(s) from the target application, or vice versa. The AI/ML model(s) may be trained to recognize that the overall copy-and-paste task involves multiple screens for completion (e.g., by recognizing that the same end state has been reached, such as a submission). In such a case, persistent data structures may be used to store data from the source for copying to the target. Indeed, a corresponding label and field for a corresponding label and value from the first screen may not appear until the second screen of the target, the target may have most or all labels/fields corresponding to labels/values from multiple screens of the target in a single screen, etc. A custom class or an existing data structure provided by the programming language (e.g., struct, array (single or multi-dimensional), dict, etc.) may be used to provide persistent storage.

In order to provide further context, some embodiments obtain additional information by hooking into the API stack of one or more applications (e.g., Outlook®, Excel®, etc.) to obtain information from API calls made due to the user's interactions with these applications. One example of information that APIs may provide is getting more context from Excel®. Via APIs, it is possible to identify what workbook the user is working with, what sheet in that workbook the user is using, what cell(s) in that sheet are being modified, etc. These APIs provide an "action" log of what the user did in a given application. This information may be useful for identifying atomic instances of tasks and/or end states for tasks.

Images captured during task mining recording and the associated API call information can be time synchronized, and the API information can be used to provide further understanding regarding what the user is doing in the screens. This may facilitate better understanding by matching sets of user actions to an activity, such as via image comparison techniques. For instance, CV (including OCR) may be used to extract information about a given screen and then a clustering algorithm may be used to match the extracted information to similar screens. This allows the type of the user action to be more accurately identified.

A more complete picture of what a user is doing may be understood by combining image analysis and API information collection. For example, screenshots, user interaction events, API events, operating system (OS) / document object model (DOM) events, user interaction/input types (e.g., mouse click versus typing), location data (e.g., where was the mouse clicked or text was entered on the screen), which mouse button was pressed, application/process name (e.g., a universal resource locator (URL) for the screen or the application that is currently running and active for a window), a UI descriptor, any combination thereof, etc. may be collected. This provides further context than image analysis alone. For instance, the API may provide information regarding which sheet and cell in an Excel® spreadsheet was modified, the format of that cell (e.g., currency, string, etc.), and various other API-facilitated information.

When a person manually copies information from one screen to another, but modifies one or more fields, that person may be considered to inherently perform the transformation and validation for the data from the source to the target for those fields. Also, it may be inferred that fields that were copied without modification are accurate. In other words, the transformation and the validation may be considered to inherently be present in this information. Task mining data may include source/destination fields, copied data, and inferential transformations. This insight can be used to better train a mapping AI/ML model so that such information can be discovered automatically. An RPA workflow/automation may then be automatically created once the mapping AI/ML model is sufficiently accurate.

Task mining data could also be used to improve existing AI/ML models. For instance, user mappings from source labels/fields to target labels/fields included in task mining data may be collected and used to train and provide improved versions of the existing AI/ML models. Such trained/improved AI/ML model versions may then be applied to previously unencountered scenarios, and if appropriately trained, mappings may be performed accurately and automatically. Such a feature is useful in the real world, where information is frequently copied from one place to another (i.e., from a source to a target), but the labels in the source and the target are not necessarily the same. In some embodiments, AI/ML models may be trained so the user does not need to propose the automation first. Rather, RPA software may suggest it without an explicit request form the user.

Per the above, the AI/ML models are first trained and then used to suggest RPA workflows. The training may be performed iteratively as task mining data continues to be collected. Once sufficiently accurate, automations could even be created and employed without user confirmation. The user may begin performing a copy-and-paste process, and once recognized as such by the software, the copy-and-paste task may automatically be completed. The user may then confirm whether this is desired in some embodiments.

Some embodiments use a large semantic language model that maps the similarity of the fields based on semantic meaning in high dimensionality vector space. For instance, a natural language processing (NLP) model such as word2vec or a more advanced semantic NLP model such as Bidirectional Encoder Representations from Transformers (BERT) or Generative Pre-trained Transformer 3 (GPT-3) may be used. Such models build a vector representation of the screen and may learn that two different labels are similar using learned language understanding.

In order to provide semantic understanding, a label from the source and a label from the target may be provided to a trained semantic NL model, which compares the labels and provides a similarity score (e.g., between 0% and 100%, between 0 and 1, between -1 and 1, etc.). A similarity threshold may be required for two labels to be considered as a match, such as 75%, 90%, 99%, etc. if percentage is used for the similarity score.

In some embodiments, rather than label comparisons alone, it may be determined how similar two sentences are to one another in terms of what they mean. Similar to the example in the previous paragraph, a sentence from the source and a sentence from the target may be provided to a BERT model or a GPT-3 model as input. A similarity score is provided by the model, and this is compared to the similarity threshold. In some embodiments, the similarity score and/or similarity threshold for word or phrase labels may differ from those for sentences.

The task mining data is useful for fine-tuning the NLP model in some embodiments. Such models are usually initially trained based on consuming a massive amount of open source text as input. By adding information indicating that one label is similar to another, such models learn even more accurate associations. Such additional "applied" training information is not merely based on random data from the Internet and provides high quality training data for semantic mapping purposes.

Certain objectives, such as contracted learning, may be applied to a large set of data that has not been labeled by humans (e.g., screen images) to build vector representations of the contents of the screen images. A clustering approach, such as k-means clustering or Density-Based Spatial Clustering of Applications with Noise (DBSCAN), may then be used to obtain a clustered representation from the vector representation as an input. Such clustered representations may be useful to distinguish copy-and-paste operations from other operations.

In certain embodiments, an AI/ML model may detect that a copy-and-paste operation is likely in progress. For instance, the AI/ML model or deterministic logic could detect that multiple copy-and-paste operations between individual fields in a source and a target screen occurred, and then ask the user whether to attempt the operation automatically. In some embodiments, the AI/ML model or deterministic logic may first verify that the interfaces for the suspected source/target are field/label-based interfaces.

If the user elects this option, the semantic matching model attempts to complete the operation. In some embodiments, the semantic matching model could be used to autocomplete the operation and then potentially prompt the user regarding whether the operation was done correctly. If one or more fields were not matched correctly, the user may provide corrections.

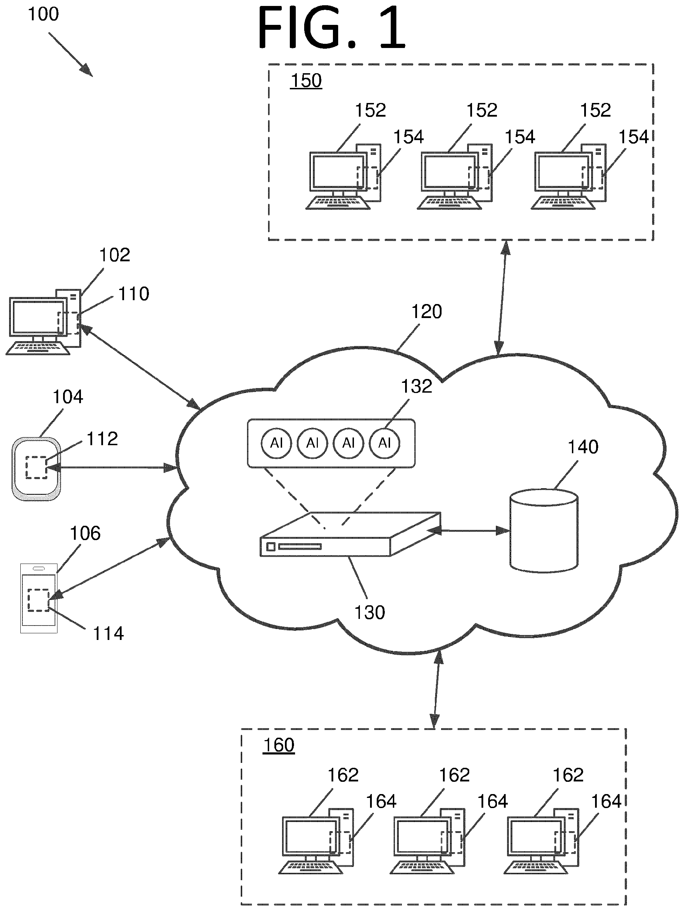

FIG. 1 is an architectural diagram illustrating a hyper-automation system 100, according to an embodiment of the present invention. "Hyper-automation," as used herein, refers to automation systems that bring together components of process automation, integration tools, and technologies that amplify the ability to automate work. For instance, RPA may be used at the core of a hyper-automation system in some embodiments, and in certain embodiments, automation capabilities may be expanded with artificial intelligence (AI) / machine learning (ML), process mining, analytics, and/or other advanced tools. As the hyper-automation system learns processes, trains AI/ML models, and employs analytics, for example, more and more knowledge work may be automated, and computing systems in an organization, e.g., both those used by individuals and those that run autonomously, may all be engaged to be participants in the hyper-automation process. Hyper-automation systems of some embodiments allow users and organizations to efficiently and effectively discover, understand, and scale automations.

Hyper-automation system 100 includes user computing systems, such as desktop computer 102, tablet 104, and smart phone 106. However, any desired user computing system may be used without deviating from the scope of the invention including, but not limited to, smart watches, laptop computers, servers, Internet-of-Things (IoT) devices, etc. Also, while three user computing systems are shown in FIG. 1, any suitable number of user computing systems may be used without deviating from the scope of the invention. For instance, in some embodiments, dozens, hundreds, thousands, or millions of user computing systems may be used. The user computing systems may be actively used by a user or run automatically without much or any user input.

Each user computing system 102, 104, 106 has respective automation process(es) 110, 112, 114 running thereon. Automation process(es) 110, 112, 114 may include, but are not limited to, RPA robots, part of an operating system, downloadable application(s) for the respective computing system, any other suitable software and/or hardware, or any combination of these without deviating from the scope of the invention. In some embodiments, one or more of process(es) 110, 112, 114 may be listeners. Listeners may be RPA robots, part of an operating system, a downloadable application for the respective computing system, or any other software and/or hardware without deviating from the scope of the invention. Indeed, in some embodiments, the logic of the listener(s) is implemented partially or completely via physical hardware.

Listeners monitor and record data pertaining to user interactions with respective computing systems and/or operations of unattended computing systems and send the data to a core hyper-automation system 120 via a network (e.g., a local area network (LAN), a mobile communications network, a satellite communications network, the Internet, any combination thereof, etc.). Listeners may be attended or unattended, depending on the application thereof. The listener data may include, but is not limited to, which buttons were clicked, where a mouse was moved, the text that was entered in a field, that one window was minimized and another was opened, the application associated with a window, a description from the user of the task that was being accomplished, labels, fields, and values in screens or forms, information from the operating system, information from application API(s), etc. In certain embodiments, the data from the listeners may be sent periodically as part of a heartbeat message. In some embodiments, the data may be sent to core hyper-automation system 120 once a predetermined amount of data has been collected, after a predetermined time period has elapsed, or both. One or more servers, such as server 130, receive and store data from the listeners in a database, such as database 140.

Automation processes may execute the logic developed in workflows during design time. In the case of RPA, workflows may include a set of steps, defined herein as "activities," that are executed in a sequence or some other logical flow. Each activity may include an action, such as clicking a button, reading a file, writing to a log panel, etc. In some embodiments, workflows may be nested or embedded.

Long-running workflows for RPA in some embodiments are master projects that support service orchestration, human intervention, and long-running transactions in unattended environments. See, for example, U.S. Patent No. 10,860,905. Human intervention comes into play when certain processes require human inputs to handle exceptions, approvals, or validation before proceeding to the next step in the activity. In this situation, the process execution is suspended, freeing up the RPA robots until the human task completes.

A long-running workflow may support workflow fragmentation via persistence activities and may be combined with invoke process and non-user interaction activities, orchestrating human tasks with RPA robot tasks. In some embodiments, multiple or many computing systems may participate in executing the logic of a long-running workflow. The long-running workflow may run in a session to facilitate speedy execution. In some embodiments, long-running workflows may orchestrate background processes that may contain activities performing API calls and running in the long-running workflow session. These activities may be invoked by an invoke process activity in some embodiments. A process with user interaction activities that runs in a user session may be called by starting a job from a conductor activity (conductor described in more detail later herein). The user may interact through tasks that require forms to be completed in the conductor in some embodiments. Activities may be included that cause the RPA robot to wait for a form task to be completed and then resume the long-running workflow.

One or more of automation process(es) 110, 112, 114 is in communication with core hyper-automation system 120. In some embodiments, core hyper-automation system 120 may run a conductor application on one or more servers, such as server 130. While one server 130 is shown for illustration purposes, multiple or many servers that are proximate to one another or in a distributed architecture may be employed without deviating from the scope of the invention. For instance, one or more servers may be provided for conductor functionality, AI/ML model serving, authentication, governance, and/or any other suitable functionality without deviating from the scope of the invention. In some embodiments, core hyper-automation system 120 may incorporate or be part of a public cloud architecture, a private cloud architecture, a hybrid cloud architecture, etc. In certain embodiments, core hyper-automation system 120 may host multiple software-based servers on one or more computing systems, such as server 130. In some embodiments, one or more servers of core hyper-automation system 120, such as server 130, may be implemented via one or more virtual machines (VMs).

In some embodiments, one or more of automation process(es) 110, 112, 114 may call one or more AI/ML models 132 deployed on or accessible by core hyper-automation system 120. AI/ML models 132 may be trained for any suitable purpose without deviating from the scope of the invention, as will be discussed in more detail later herein. Two or more of AI/ML models 132 may be chained in some embodiments (e.g., in series, in parallel, or a combination thereof) such that they collectively provide collaborative output(s). AI/ML models 132 may perform or assist with CV (including OCR), document processing and/or understanding, semantic learning and/or analysis, analytical predictions, process discovery, task mining, testing, automatic RPA workflow generation, sequence extraction, clustering detection, audio-to-text translation, any combination thereof, etc. However, any desired number and/or type(s) of AI/ML models may be used without deviating from the scope of the invention. Using multiple AI/ML models may allow the system to develop a global picture of what is happening on a given computing system, for example. For instance, one AI/ML model could perform OCR, another could detect buttons, another could compare sequences, etc. Patterns may be determined individually by an AI/ML model or collectively by multiple AI/ML models. In certain embodiments, one or more AI/ML models are deployed locally on at least one of computing systems 102, 104, 106.

In some embodiments, multiple AI/ML models 132 may be used, potentially in series, in parallel, or a combination thereof. Each AI/ML model 132 is an algorithm (or model) that runs on the data, and the AI/ML model itself may be a deep learning neural network (DLNN) of trained artificial "neurons" that are trained on training data, for example. In some embodiments, AI/ML models 132 may have multiple layers that perform various functions, such as statistical modeling (e.g., hidden Markov models (HMMs)), and utilize deep learning techniques (e.g., long short term memory (LSTM) deep learning, encoding of previous hidden states, etc.) to perform the desired functionality.

Hyper-automation system 100 may provide four main groups of functionality in some embodiments: (1) discovery; (2) building automations; (3) management; and (4) engagement. Automations (e.g., run on a user computing system, a server, etc.) may be run by software robots, such as RPA robots, in some embodiments. For instance, attended robots, unattended robots, and/or test robots may be used. Attended robots work with users to assist them with tasks (e.g., via UiPath Assistant™). Unattended robots work independently of users and may run in the background, potentially without user knowledge. Test robots are unattended robots that run test cases against applications or RPA workflows. Test robots may be run on multiple computing systems in parallel in some embodiments.

The discovery functionality may discover and provide automatic recommendations for different opportunities of automations of business processes. Such functionality may be implemented by one or more servers, such as server 130. The discovery functionality may include providing an automation hub, process mining, task mining, and/or task capture in some embodiments. The automation hub (e.g., UiPath Automation Hub™) may provide a mechanism for managing automation rollout with visibility and control. Automation ideas may be crowdsourced from employees via a submission form, for example. Feasibility and return on investment (ROI) calculations for automating these ideas may be provided, documentation for future automations may be collected, and collaboration may be provided to get from automation discovery to build-out faster.

Process mining (e.g., via UiPath Automation Cloud™ and/or UiPath AI Center™) refers to the process of gathering and analyzing the data from applications (e.g., enterprise resource planning (ERP) applications, customer relation management (CRM) applications, email applications, call center applications, etc.) to identify what end-to-end processes exist in an organization and how to automate them effectively, as well as indicate what the impact of the automation will be. This data may be gleaned from user computing systems 102, 104, 106 by listeners, for example, and processed by servers, such as server 130. One or more AI/ML models 132 may be employed for this purpose in some embodiments. This information may be exported to the automation hub to speed up implementation and avoid manual information transfer. The goal of process mining may be to increase business value by automating processes within an organization. Some examples of process mining goals include, but are not limited to, increasing profit, improving customer satisfaction, regulatory and/or contractual compliance, improving employee efficiency, etc.

Task mining (e.g., via UiPath Automation Cloud™ and/or UiPath AI Center™) identifies and aggregates workflows (e.g., employee workflows), and then applies AI to expose patterns and variations in day-to-day tasks, scoring such tasks for ease of automation and potential savings (e.g., time and/or cost savings). One or more AI/ML models 132 may be employed to uncover recurring task patterns in the data. Repetitive tasks that are ripe for automation may then be identified. This information may initially be provided by listeners and analyzed on servers of core hyper-automation system 120, such as server 130, in some embodiments. The findings from task mining (e.g., Extensible Application Markup Language (XAML) process data) may be exported to process documents or to a designer application such as UiPath Studio™ to create and deploy automations more rapidly. Task mining in some embodiments may include taking screenshots with user actions (e.g., mouse click locations, keyboard inputs, application windows and graphical elements the user was interacting with, timestamps for the interactions, etc.), collecting statistical data (e.g., execution time, number of actions, text entries, etc.), editing and annotating screenshots, specifying types of actions to be recorded, etc.

Task capture (e.g., via UiPath Automation Cloud™ and/or UiPath AI Center™) automatically documents attended processes as users work or provides a framework for unattended processes. Such documentation may include desired tasks to automate in the form of process definition documents (PDDs), skeletal workflows, capturing actions for each part of a process, recording user actions and automatically generating a comprehensive workflow diagram including the details about each step, Microsoft Word® documents, XAML files, and the like. Build-ready workflows may be exported directly to a designer application in some embodiments, such as UiPath Studio™. Task capture may simplify the requirements gathering process for both subject matter experts explaining a process and Center of Excellence (CoE) members providing production-grade automations.

Building automations may be accomplished via a designer application (e.g., UiPath Studio™, UiPath StudioX™, UiPath Web™, etc.). For instance, RPA developers of an RPA development facility 150 may use RPA designer applications 154 of computing systems 152 to build and test automations for various applications and environments, such as web, mobile, SAP®, and virtualized desktops. API integration may be provided for various applications, technologies, and platforms. Predefined activities, drag-and-drop modeling, and a workflow recorder, may make automation easier with minimal coding. Document understanding functionality may be provided via Drag-and-drop AI skills for data extraction and interpretation that call one or more AI/ML models 132. Such automations may process virtually any document type and format, including tables, checkboxes, signatures, and handwriting. When data is validated or exceptions are handled, this information may be used to retrain the respective AI/ML models, improving their accuracy over time.

An integration service may allow developers to seamlessly combine user interface (UI) automation with API automation, for example. Automations may be built that require APIs or traverse both API and non-API applications and systems. A repository (e.g., UiPath Object Repository™) or marketplace (e.g., UiPath Marketplace™) for pre-built RPA and AI templates and solutions may be provided to allow developers to automate a wide variety of processes more quickly. Thus, when building automations, hyper-automation system 100 may provide user interfaces, development environments, API integration, pre-built and/or custom-built AI/ML models, development templates, integrated development environments (IDEs), and advanced AI capabilities. Hyper-automation system 100 enables development, deployment, management, configuration, monitoring, debugging, and maintenance of RPA robots in some embodiments, which may provide automations for hyper-automation system 100.

In some embodiments, components of hyper-automation system 100, such as designer application(s) and/or an external rules engine, provide support for managing and enforcing governance policies for controlling various functionality provided by hyper-automation system 100. Governance is the ability for organizations to put policies in place to prevent users from developing automations (e.g., RPA robots) capable of taking actions that may harm the organization, such as violating the E.U. General Data Protection Regulation (GDPR), the U.S. Health Insurance Portability and Accountability Act (HIPAA), third party application terms of service, etc. Since developers may otherwise create automations that violate privacy laws, terms of service, etc. while performing their automations, some embodiments implement access control and governance restrictions at the robot and/or robot design application level. This may provide an added level of security and compliance into to the automation process development pipeline in some embodiments by preventing developers from taking dependencies on unapproved software libraries that may either introduce security risks or work in a way that violates policies, regulations, privacy laws, and/or privacy policies. See, for example, U.S. Patent Application Publication No. 2022/0011732.

The management functionality may provide management, deployment, and optimization of automations across an organization. The management functionality may include orchestration, test management, AI functionality, and/or insights in some embodiments. Management functionality of hyper-automation system 100 may also act as an integration point with third-party solutions and applications for automation applications and/or RPA robots. The management capabilities of hyper-automation system 100 may include, but are not limited to, facilitating provisioning, deployment, configuration, queuing, monitoring, logging, and interconnectivity of RPA robots, among other things.

A conductor application, such as UiPath Orchestrator™ (which may be provided as part of the UiPath Automation Cloud™ in some embodiments, or on premises, in VMs, in a private or public cloud, in a Linux™ VM, or as a cloud native single container suite via UiPath Automation Suite™), provides orchestration capabilities to deploy, monitor, optimize, scale, and ensure security of RPA robot deployments. A test suite (e.g., UiPath Test Suite™) may provide test management to monitor the quality of deployed automations. The test suite may facilitate test planning and execution, meeting of requirements, and defect traceability. The test suite may include comprehensive test reporting.

Analytics software (e.g., UiPath Insights™) may track, measure, and manage the performance of deployed automations. The analytics software may align automation operations with specific key performance indicators (KPIs) and strategic outcomes for an organization. The analytics software may present results in a dashboard format for better understanding by human users.

A data service (e.g., UiPath Data Service™) may be stored in database 140, for example, and bring data into a single, scalable, secure place with a drag-and-drop storage interface. Some embodiments may provide low-code or no-code data modeling and storage to automations while ensuring seamless access, enterprise-grade security, and scalability of the data. AI functionality may be provided by an AI center (e.g., UiPath AI Center™), which facilitates incorporation of AI/ML models into automations. Pre-built AI/ML models, model templates, and various deployment options may make such functionality accessible even to those who are not data scientists. Deployed automations (e.g., RPA robots) may call AI/ML models from the AI center, such as AI/ML models 132. Performance of the AI/ML models may be monitored, and the AI/ML models may be trained and improved using human-validated data, such as that provided by data review center 160. Human reviewers may provide labeled data to core hyper-automation system 120 via a review application 152 on computing systems 154. For instance, human reviewers may validate that predictions by AI/ML models 132 are accurate or provide corrections otherwise. This dynamic input may then be saved as training data for retraining AI/ML models 132, and may be stored in a database such as database 140, for example. The AI center may then schedule and execute training jobs to train the new versions of the AI/ML models using the training data. Both positive and negative examples may be stored and used for retraining of AI/ML models 132.

The engagement functionality engages humans and automations as one team for seamless collaboration on desired processes. Low-code applications may be built (e.g., via UiPath Apps™) to connect browser tabs and legacy software, even that lacking APIs in some embodiments. Applications may be created quickly using a web browser through a rich library of drag-and-drop controls, for instance. An application can be connected to a single automation or multiple automations.

An action center (e.g., UiPath Action Center™) provides a straightforward and efficient mechanism to hand off processes from automations to humans, and vice versa. Humans may provide approvals or escalations, make exceptions, etc. The automation may then perform the automatic functionality of a given workflow.

A local assistant may be provided as a launchpad for users to launch automations (e.g., UiPath Assistant™). This functionality may be provided in a tray provided by an operating system, for example, and may allow users to interact with RPA robots and RPA robot-powered applications on their computing systems. An interface may list automations approved for a given user and allow the user to run them. These may include ready-to-go automations from an automation marketplace, an internal automation store in an automation hub, etc. When automations run, they may run as a local instance in parallel with other processes on the computing system so users can use the computing system while the automation performs its actions. In certain embodiments, the assistant is integrated with the task capture functionality such that users can document their soon-to-be-automated processes from the assistant launch pad.

Chatbots (e.g., UiPath Chatbots™), social messaging applications, an/or voice commands may enable users to run automations. This may simplify access to information, tools, and resources users need in order to interact with customers or perform other activities. Conversations between people may be readily automated, as with other processes. Trigger RPA robots kicked off in this manner may perform operations such as checking an order status, posting data in a CRM, etc., potentially using plain language commands.

End-to-end measurement and government of an automation program at any scale may be provided by hyper-automation system 100 in some embodiments. Per the above, analytics may be employed to understand the performance of automations (e.g., via UiPath Insights™). Data modeling and analytics using any combination of available business metrics and operational insights may be used for various automated processes. Custom-designed and pre-built dashboards allow data to be visualized across desired metrics, new analytical insights to be discovered, performance indicators to be tracked, ROI to be discovered for automations, telemetry monitoring to be performed on user computing systems, errors and anomalies to be detected, and automations to be debugged. An automation management console (e.g., UiPath Automation Ops™) may be provided to manage automations throughout the automation lifecycle. An organization may govern how automations are built, what users can do with them, and which automations users can access.

Hyper-automation system 100 provides an iterative platform in some embodiments. Processes can be discovered, automations can be built, tested, and deployed, performance may be measured, use of the automations may readily be provided to users, feedback may be obtained, AI/ML models may be trained and retrained, and the process may repeat itself. This facilitates a more robust and effective suite of automations.

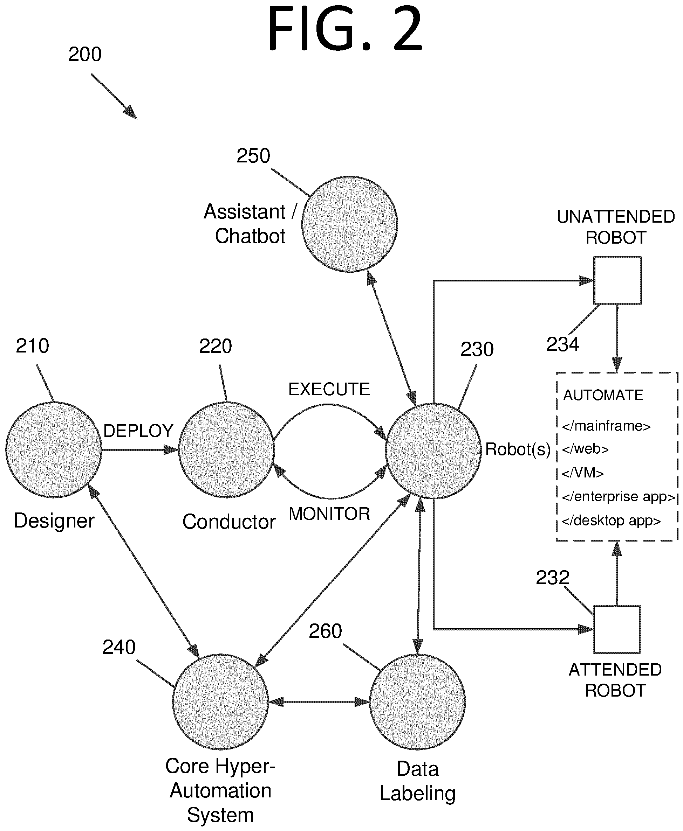

FIG. 2 is an architectural diagram illustrating an RPA system 200, according to an embodiment of the present invention. In some embodiments, RPA system 200 is part of hyper-automation system 100 of FIG. 1. RPA system 200 includes a designer 210 that allows a developer to design and implement workflows. Designer 210 may provide a solution for application integration, as well as automating third-party applications, administrative Information Technology (IT) tasks, and business IT processes. Designer 210 may facilitate development of an automation project, which is a graphical representation of a business process. Simply put, designer 210 facilitates the development and deployment of workflows and robots. In some embodiments, designer 210 may be an application that runs on a user's desktop, an application that runs remotely in a VM, a web application, etc.

The automation project enables automation of rule-based processes by giving the developer control of the execution order and the relationship between a custom set of steps developed in a workflow, defined herein as "activities" per the above. One commercial example of an embodiment of designer 210 is UiPath Studio™. Each activity may include an action, such as clicking a button, reading a file, writing to a log panel, etc. In some embodiments, workflows may be nested or embedded.

Some types of workflows may include, but are not limited to, sequences, flowcharts, Finite State Machines (FSMs), and/or global exception handlers. Sequences may be particularly suitable for linear processes, enabling flow from one activity to another without cluttering a workflow. Flowcharts may be particularly suitable to more complex business logic, enabling integration of decisions and connection of activities in a more diverse manner through multiple branching logic operators. FSMs may be particularly suitable for large workflows. FSMs may use a finite number of states in their execution, which are triggered by a condition (i.e., transition) or an activity. Global exception handlers may be particularly suitable for determining workflow behavior when encountering an execution error and for debugging processes.

Once a workflow is developed in designer 210, execution of business processes is orchestrated by conductor 220, which orchestrates one or more robots 230 that execute the workflows developed in designer 210. One commercial example of an embodiment of conductor 220 is UiPath Orchestrator™. Conductor 220 facilitates management of the creation, monitoring, and deployment of resources in an environment. Conductor 220 may act as an integration point with third-party solutions and applications. Per the above, in some embodiments, conductor 220 may be part of core hyper-automation system 120 of FIG. 1.

Conductor 220 may manage a fleet of robots 230, connecting and executing robots 230 from a centralized point. Types of robots 230 that may be managed include, but are not limited to, attended robots 232, unattended robots 234, development robots (similar to unattended robots 234, but used for development and testing purposes), and nonproduction robots (similar to attended robots 232, but used for development and testing purposes). Attended robots 232 are triggered by user events and operate alongside a human on the same computing system. Attended robots 232 may be used with conductor 220 for a centralized process deployment and logging medium. Attended robots 232 may help the human user accomplish various tasks, and may be triggered by user events. In some embodiments, processes cannot be started from conductor 220 on this type of robot and/or they cannot run under a locked screen. In certain embodiments, attended robots 232 can only be started from a robot tray or from a command prompt. Attended robots 232 should run under human supervision in some embodiments.

Unattended robots 234 run unattended in virtual environments and can automate many processes. Unattended robots 234 may be responsible for remote execution, monitoring, scheduling, and providing support for work queues. Debugging for all robot types may be run in designer 210 in some embodiments. Both attended and unattended robots may automate various systems and applications including, but not limited to, mainframes, web applications, VMs, enterprise applications (e.g., those produced by SAP®, SalesForce®, Oracle®, etc.), and computing system applications (e.g., desktop and laptop applications, mobile device applications, wearable computer applications, etc.).

Conductor 220 may have various capabilities including, but not limited to, provisioning, deployment, configuration, queueing, monitoring, logging, and/or providing interconnectivity. Provisioning may include creating and maintenance of connections between robots 230 and conductor 220 (e.g., a web application). Deployment may include assuring the correct delivery of package versions to assigned robots 230 for execution. Configuration may include maintenance and delivery of robot environments and process configurations. Queueing may include providing management of queues and queue items. Monitoring may include keeping track of robot identification data and maintaining user permissions. Logging may include storing and indexing logs to a database (e.g., a structured query language (SQL) database or a "not only" SQL (NoSQL) database) and/or another storage mechanism (e.g., ElasticSearch®, which provides the ability to store and quickly query large datasets). Conductor 220 may provide interconnectivity by acting as the centralized point of communication for third-party solutions and/or applications.

Robots 230 are execution agents that implement workflows built in designer 210. One commercial example of some embodiments of robot(s) 230 is UiPath Robots™. In some embodiments, robots 230 install the Microsoft Windows® Service Control Manager (SCM)-managed service by default. As a result, such robots 230 can open interactive Windows® sessions under the local system account, and have the rights of a Windows® service.

In some embodiments, robots 230 can be installed in a user mode. For such robots 230, this means they have the same rights as the user under which a given robot 230 has been installed. This feature may also be available for High Density (HD) robots, which ensure full utilization of each machine at its maximum potential. In some embodiments, any type of robot 230 may be configured in an HD environment.

Robots 230 in some embodiments are split into several components, each being dedicated to a particular automation task. The robot components in some embodiments include, but are not limited to, SCM-managed robot services, user mode robot services, executors, agents, and command line. SCM-managed robot services manage and monitor Windows® sessions and act as a proxy between conductor 220 and the execution hosts (i.e., the computing systems on which robots 230 are executed). These services are trusted with and manage the credentials for robots 230. A console application is launched by the SCM under the local system.

User mode robot services in some embodiments manage and monitor Windows® sessions and act as a proxy between conductor 220 and the execution hosts. User mode robot services may be trusted with and manage the credentials for robots 230. A Windows® application may automatically be launched if the SCM-managed robot service is not installed.

Executors may run given jobs under a Windows® session (i.e., they may execute workflows. Executors may be aware of per-monitor dots per inch (DPI) settings. Agents may be Windows® Presentation Foundation (WPF) applications that display the available jobs in the system tray window. Agents may be a client of the service. Agents may request to start or stop jobs and change settings. The command line is a client of the service. The command line is a console application that can request to start jobs and waits for their output.

Having components of robots 230 split as explained above helps developers, support users, and computing systems more easily run, identify, and track what each component is executing. Special behaviors may be configured per component this way, such as setting up different firewall rules for the executor and the service. The executor may always be aware of DPI settings per monitor in some embodiments. As a result, workflows may be executed at any DPI, regardless of the configuration of the computing system on which they were created. Projects from designer 210 may also be independent of browser zoom level in some embodiments. For applications that are DPI-unaware or intentionally marked as unaware, DPI may be disabled in some embodiments.

RPA system 200 in this embodiment is part of a hyper-automation system. Developers may use designer 210 to build and test RPA robots that utilize AI/ML models deployed in core hyper-automation system 240 (e.g., as part of an AI center thereof). Such RPA robots may send input for execution of the AI/ML model(s) and receive output therefrom via core hyper-automation system 240.

One or more of robots 230 may be listeners, as described above. These listeners may provide information to core hyper-automation system 240 regarding what users are doing when they use their computing systems. This information may then be used by core hyper-automation system for process mining, task mining, task capture, etc.

An assistant / chatbot 250 may be provided on user computing systems to allow users to launch RPA local robots. The assistant may be located in a system tray, for example. Chatbots may have a user interface so users can see text in the chatbot. Alternatively, chatbots may lack a user interface and run in the background, listening using the computing system's microphone for user speech.

In some embodiments, data labeling may be performed by a user of the computing system on which a robot is executing or on another computing system that the robot provides information to. For instance, if a robot calls an AI/ML model that performs CV on images for VM users, but the AI/ML model does not correctly identify a button on the screen, the user may draw a rectangle around the misidentified or non-identified component and potentially provide text with a correct identification. This information may be provided to core hyper-automation system 240 and then used later for training a new version of the AI/ML model.

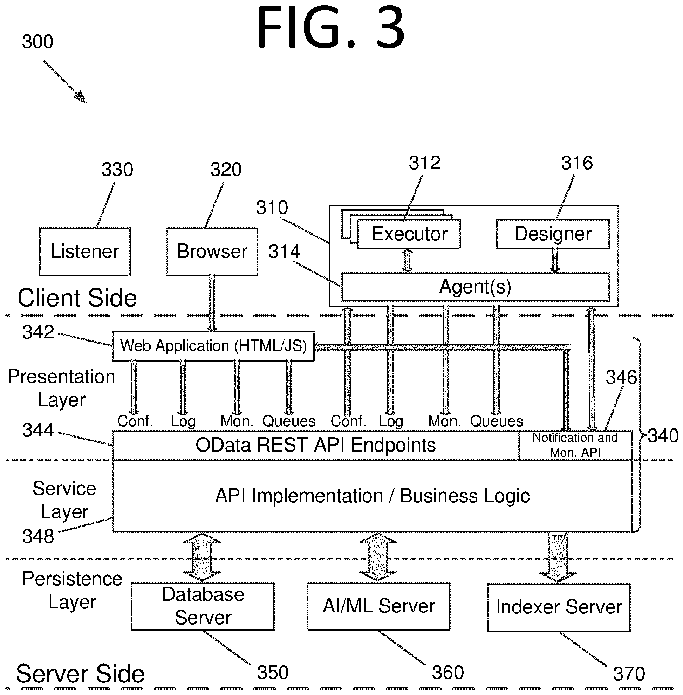

FIG. 3 is an architectural diagram illustrating a deployed RPA system 300, according to an embodiment of the present invention. In some embodiments, RPA system 300 may be a part of RPA system 200 of FIG. 2 and/or hyper-automation system 100 of FIG. 1. Deployed RPA system 300 may be a cloud-based system, an on-premises system, a desktop-based system that offers enterprise level, user level, or device level automation solutions for automation of different computing processes, etc.

It should be noted that the client side, the server side, or both, may include any desired number of computing systems without deviating from the scope of the invention. On the client side, a robot application 310 includes executors 312, an agent 314, and a designer 316. However, in some embodiments, designer 316 may not be running on the same computing system as executors 312 and agent 314. Executors 312 are running processes. Several business projects may run simultaneously, as shown in FIG. 3. Agent 314 (e.g., a Windows® service) is the single point of contact for all executors 312 in this embodiment. All messages in this embodiment are logged into conductor 340, which processes them further via database server 350, an AI/ML server 360, an indexer server 370, or any combination thereof. As discussed above with respect to FIG. 2, executors 312 may be robot components.

In some embodiments, a robot represents an association between a machine name and a username. The robot may manage multiple executors at the same time. On computing systems that support multiple interactive sessions running simultaneously (e.g., Windows® Server 2012), multiple robots may be running at the same time, each in a separate Windows® session using a unique username. This is referred to as HD robots above.

Agent 314 is also responsible for sending the status of the robot (e.g., periodically sending a "heartbeat" message indicating that the robot is still functioning) and downloading the required version of the package to be executed. The communication between agent 314 and conductor 340 is always initiated by agent 314 in some embodiments. In the notification scenario, agent 314 may open a WebSocket channel that is later used by conductor 330 to send commands to the robot (e.g., start, stop, etc.).

A listener 330 monitors and records data pertaining to user interactions with an attended computing system and/or operations of an unattended computing system on which listener 330 resides. Listener 330 may be an RPA robot, part of an operating system, a downloadable application for the respective computing system, or any other software and/or hardware without deviating from the scope of the invention. Indeed, in some embodiments, the logic of the listener is implemented partially or completely via physical hardware.

On the server side, a presentation layer (web application 342, Open Data Protocol (OData) Representative State Transfer (REST) Application Programming Interface (API) endpoints 344, and notification and monitoring 346), a service layer (API implementation / business logic 348), and a persistence layer (database server 350, AI/ML server 360, and indexer server 370) are included. Conductor 340 includes web application 342, OData REST API endpoints 344, notification and monitoring 346, and API implementation / business logic 348. In some embodiments, most actions that a user performs in the interface of conductor 340 (e.g., via browser 320) are performed by calling various APIs. Such actions may include, but are not limited to, starting jobs on robots, adding/removing data in queues, scheduling jobs to run unattended, etc. without deviating from the scope of the invention. Web application 342 is the visual layer of the server platform. In this embodiment, web application 342 uses Hypertext Markup Language (HTML) and JavaScript (JS). However, any desired markup languages, script languages, or any other formats may be used without deviating from the scope of the invention. The user interacts with web pages from web application 342 via browser 320 in this embodiment in order to perform various actions to control conductor 340. For instance, the user may create robot groups, assign packages to the robots, analyze logs per robot and/or per process, start and stop robots, etc.

In addition to web application 342, conductor 340 also includes service layer that exposes OData REST API endpoints 344. However, other endpoints may be included without deviating from the scope of the invention. The REST API is consumed by both web application 342 and agent 314. Agent 314 is the supervisor of one or more robots on the client computer in this embodiment.

The REST API in this embodiment covers configuration, logging, monitoring, and queueing functionality. The configuration endpoints may be used to define and configure application users, permissions, robots, assets, releases, and environments in some embodiments. Logging REST endpoints may be used to log different information, such as errors, explicit messages sent by the robots, and other environment-specific information, for instance. Deployment REST endpoints may be used by the robots to query the package version that should be executed if the start job command is used in conductor 340. Queueing REST endpoints may be responsible for queues and queue item management, such as adding data to a queue, obtaining a transaction from the queue, setting the status of a transaction, etc.

Monitoring REST endpoints may monitor web application 342 and agent 314. Notification and monitoring API 346 may be REST endpoints that are used for registering agent 314, delivering configuration settings to agent 314, and for sending/receiving notifications from the server and agent 314. Notification and monitoring API 346 may also use WebSocket communication in some embodiments.

The APIs in the service layer may be accessed through configuration of an appropriate API access path in some embodiments, e.g., based on whether conductor 340 and an overall hyper-automation system have an on-premises deployment type or a cloud-based deployment type. APIs for conductor 340 may provide custom methods for querying stats about various entities registered in conductor 340. Each logical resource may be an OData entity in some embodiments. In such an entity, components such as the robot, process, queue, etc., may have properties, relationships, and operations. APIs of conductor 340 may be consumed by web application 342 and/or agents 314 in two ways in some embodiments: by getting the API access information from conductor 340, or by registering an external application to use the OAuth flow.

The persistence layer includes a trio of servers in this embodiment - database server 350 (e.g., a SQL server), AI/ML server 360 (e.g., a server providing AI/ML model serving services, such as AI center functionality) and indexer server 370. Database server 350 in this embodiment stores the configurations of the robots, robot groups, associated processes, users, roles, schedules, etc. This information is managed through web application 342 in some embodiments. Database server 350 may manage queues and queue items. In some embodiments, database server 350 may store messages logged by the robots (in addition to or in lieu of indexer server 370). Database server 350 may also store process mining, task mining, and/or task capture-related data, received from listener 330 installed on the client side, for example. While no arrow is shown between listener 330 and database 350, it should be understood that listener 330 is able to communicate with database 350, and vice versa in some embodiments. This data may be stored in the form of PDDs, images, XAML files, etc. Listener 330 may be configured to intercept user actions, processes, tasks, and performance metrics on the respective computing system on which listener 330 resides. For example, listener 330 may record user actions (e.g., clicks, typed characters, locations, applications, active elements, times, etc.) on its respective computing system and then convert these into a suitable format to be provided to and stored in database server 350.

AI/ML server 360 facilitates incorporation of AI/ML models into automations. Pre-built AI/ML models, model templates, and various deployment options may make such functionality accessible even to those who are not data scientists. Deployed automations (e.g., RPA robots) may call AI/ML models from AI/ML server 360. Performance of the AI/ML models may be monitored, and be trained and improved using human-validated data. AI/ML server 360 may schedule and execute training jobs to train new versions of the AI/ML models.

AI/ML server 360 may store data pertaining to AI/ML models and ML packages for configuring various ML skills for a user at development time. An ML skill, as used herein, is a pre-built and trained ML model for a process, which may be used by an automation, for example. AI/ML server 360 may also store data pertaining to document understanding technologies and frameworks, algorithms and software packages for various AI/ML capabilities including, but not limited to, intent analysis, natural language processing (NLP), speech analysis, different types of AI/ML models, etc.

Indexer server 370, which is optional in some embodiments, stores and indexes the information logged by the robots. In certain embodiments, indexer server 370 may be disabled through configuration settings. In some embodiments, indexer server 370 uses ElasticSearch®, which is an open source project full-text search engine. Messages logged by robots (e.g., using activities like log message or write line) may be sent through the logging REST endpoint(s) to indexer server 370, where they are indexed for future utilization.

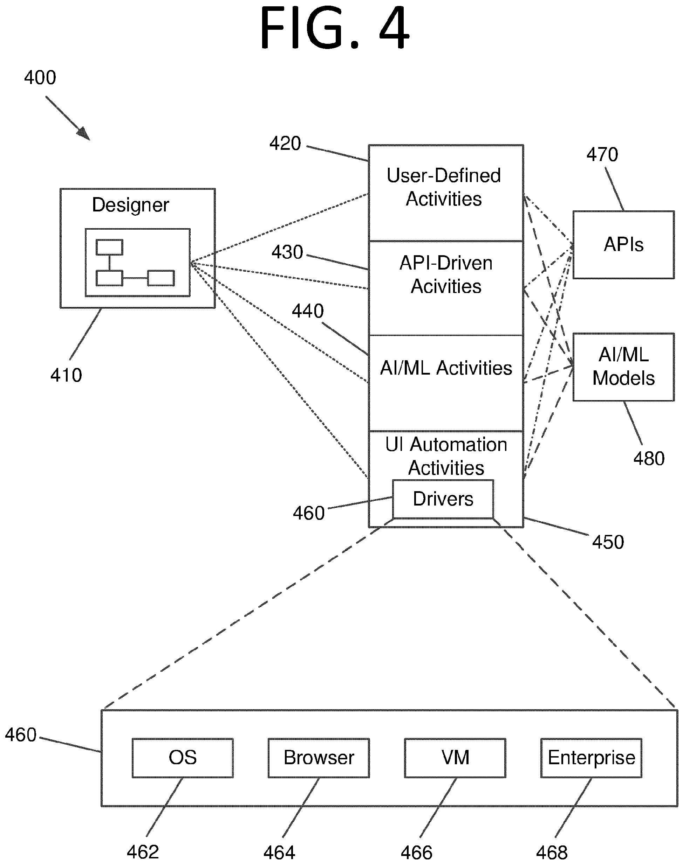

FIG. 4 is an architectural diagram illustrating the relationship 400 between a designer 410, activities 420, 430, 440, 450, drivers 460, APIs 470, and AI/ML models 480, according to an embodiment of the present invention. Per the above, a developer uses designer 410 to develop workflows that are executed by robots. The various types of activities may be displayed to the developer in some embodiments. Designer 410 may be local to the user's computing system or remote thereto (e.g., accessed via VM or a local web browser interacting with a remote web server). Workflows may include user-defined activities 420, API-driven activities 430, AI/ML activities 440, and/or and UI automation activities 450. User-defined activities 420 and API-driven activities 440 interact with applications via their APIs. User-defined activities 420 and/or AI/ML activities 440 may call one or more AI/ML models 480 in some embodiments, which may be located locally to the computing system on which the robot is operating and/or remotely thereto.

Some embodiments are able to identify non-textual visual components in an image. CV may be performed at least in part by AI/ML model(s) 480. Some CV activities pertaining to such components may include, but are not limited to, extracting of text from segmented label data using OCR, fuzzy text matching, cropping of segmented label data using ML, comparison of extracted text in label data with ground truth data, etc. In some embodiments, there may be hundreds or even thousands of activities that may be implemented in user-defined activities 420. However, any number and/or type of activities may be used without deviating from the scope of the invention.

UI automation activities 450 are a subset of special, lower-level activities that are written in lower-level code and facilitate interactions with the screen. UI automation activities 450 facilitate these interactions via drivers 460 that allow the robot to interact with the desired software. For instance, drivers 460 may include operating system (OS) drivers 462, browser drivers 464, VM drivers 466, enterprise application drivers 468, etc. One or more of AI/ML models 480 may be used by UI automation activities 450 in order to perform interactions with the computing system in some embodiments. In certain embodiments, AI/ML models 480 may augment drivers 460 or replace them completely. Indeed, in certain embodiments, drivers 460 are not included.

Drivers 460 may interact with the OS at a low level looking for hooks, monitoring for keys, etc. via OS drivers 462. Drivers 460 may facilitate integration with Chrome®, IE®, Citrix®, SAP®, etc. For instance, the "click" activity performs the same role in these different applications via drivers 460.

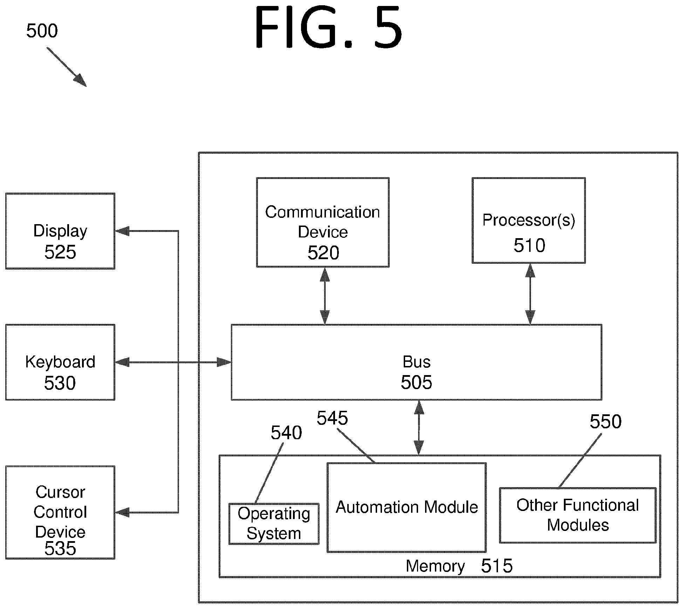

FIG. 5 is an architectural diagram illustrating a computing system 500 configured to perform AI-driven, semantic, automatic data transfer between a source and a target using task mining data as a source, according to an embodiment of the present invention. In some embodiments, computing system 500 may be one or more of the computing systems depicted and/or described herein. In certain embodiments, computing system 500 may be part of a hyper-automation system, such as that shown in FIGS. 1 and 2. Computing system 500 includes a bus 505 or other communication mechanism for communicating information, and processor(s) 510 coupled to bus 505 for processing information. Processor(s) 510 may be any type of general or specific purpose processor, including a Central Processing Unit (CPU), an Application Specific Integrated Circuit (ASIC), a Field Programmable Gate Array (FPGA), a Graphics Processing Unit (GPU), multiple instances thereof, and/or any combination thereof. Processor(s) 510 may also have multiple processing cores, and at least some of the cores may be configured to perform specific functions. Multi-parallel processing may be used in some embodiments. In certain embodiments, at least one of processor(s) 510 may be a neuromorphic circuit that includes processing elements that mimic biological neurons. In some embodiments, neuromorphic circuits may not require the typical components of a Von Neumann computing architecture.

Computing system 500 further includes a memory 515 for storing information and instructions to be executed by processor(s) 510. Memory 515 can be comprised of any combination of random access memory (RAM), read-only memory (ROM), flash memory, cache, static storage such as a magnetic or optical disk, or any other types of non-transitory computer-readable media or combinations thereof. Non-transitory computer-readable media may be any available media that can be accessed by processor(s) 510 and may include volatile media, non-volatile media, or both. The media may also be removable, non-removable, or both.

Additionally, computing system 500 includes a communication device 520, such as a transceiver, to provide access to a communications network via a wireless and/or wired connection. In some embodiments, communication device 520 may be configured to use Frequency Division Multiple Access (FDMA), Single Carrier FDMA (SC-FDMA), Time Division Multiple Access (TDMA), Code Division Multiple Access (CDMA), Orthogonal Frequency Division Multiplexing (OFDM), Orthogonal Frequency Division Multiple Access (OFDMA), Global System for Mobile (GSM) communications, General Packet Radio Service (GPRS), Universal Mobile Telecommunications System (UMTS), cdma2000, Wideband CDMA (W-CDMA), High-Speed Downlink Packet Access (HSDPA), High-Speed Uplink Packet Access (HSUPA), High-Speed Packet Access (HSPA), Long Term Evolution (LTE), LTE Advanced (LTE-A), 802.11x, Wi-Fi, Zigbee, Ultra-WideBand (UWB), 802.16x, 802.15, Home Node-B (HnB), Bluetooth, Radio Frequency Identification (RFID), Infrared Data Association (IrDA), Near-Field Communications (NFC), fifth generation (5G), New Radio (NR), any combination thereof, and/or any other currently existing or future-implemented communications standard and/or protocol without deviating from the scope of the invention. In some embodiments, communication device 520 may include one or more antennas that are singular, arrayed, phased, switched, beamforming, beamsteering, a combination thereof, and or any other antenna configuration without deviating from the scope of the invention.

Processor(s) 510 are further coupled via bus 505 to a display 525, such as a plasma display, a Liquid Crystal Display (LCD), a Light Emitting Diode (LED) display, a Field Emission Display (FED), an Organic Light Emitting Diode (OLED) display, a flexible OLED display, a flexible substrate display, a projection display, a 4K display, a high definition display, a Retina® display, an In-Plane Switching (IPS) display, or any other suitable display for displaying information to a user. Display 525 may be configured as a touch (haptic) display, a three-dimensional (3D) touch display, a multi-input touch display, a multi-touch display, etc. using resistive, capacitive, surface-acoustic wave (SAW) capacitive, infrared, optical imaging, dispersive signal technology, acoustic pulse recognition, frustrated total internal reflection, etc. Any suitable display device and haptic I/O may be used without deviating from the scope of the invention.

A keyboard 530 and a cursor control device 535, such as a computer mouse, a touchpad, etc., are further coupled to bus 505 to enable a user to interface with computing system 500. However, in certain embodiments, a physical keyboard and mouse may not be present, and the user may interact with the device solely through display 525 and/or a touchpad (not shown). Any type and combination of input devices may be used as a matter of design choice. In certain embodiments, no physical input device and/or display is present. For instance, the user may interact with computing system 500 remotely via another computing system in communication therewith, or computing system 500 may operate autonomously.

Memory 515 stores software modules that provide functionality when executed by processor(s) 510. The modules include an operating system 540 for computing system 500. The modules further include an automation module 545 that is configured to perform all or part of the processes described herein or derivatives thereof. Computing system 500 may include one or more additional functional modules 550 that include additional functionality.

One skilled in the art will appreciate that a "computing system" could be embodied as a server, an embedded computing system, a personal computer, a console, a personal digital assistant (PDA), a cell phone, a tablet computing device, a quantum computing system, or any other suitable computing device, or combination of devices without deviating from the scope of the invention. Presenting the above-described functions as being performed by a "system" is not intended to limit the scope of the present invention in any way, but is intended to provide one example of the many embodiments of the present invention. Indeed, methods, systems, and apparatuses disclosed herein may be implemented in localized and distributed forms consistent with computing technology, including cloud computing systems. The computing system could be part of or otherwise accessible by a local area network (LAN), a mobile communications network, a satellite communications network, the Internet, a public or private cloud, a hybrid cloud, a server farm, any combination thereof, etc. Any localized or distributed architecture may be used without deviating from the scope of the invention.

It should be noted that some of the system features described in this specification have been presented as modules, in order to more particularly emphasize their implementation independence. For example, a module may be implemented as a hardware circuit comprising custom very large scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices, graphics processing units, or the like.

A module may also be at least partially implemented in software for execution by various types of processors. An identified unit of executable code may, for instance, include one or more physical or logical blocks of computer instructions that may, for instance, be organized as an object, procedure, or function. Nevertheless, the executables of an identified module need not be physically located together, but may include disparate instructions stored in different locations that, when joined logically together, comprise the module and achieve the stated purpose for the module. Further, modules may be stored on a computer-readable medium, which may be, for instance, a hard disk drive, flash device, RAM, tape, and/or any other such non-transitory computer-readable medium used to store data without deviating from the scope of the invention.

Indeed, a module of executable code could be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

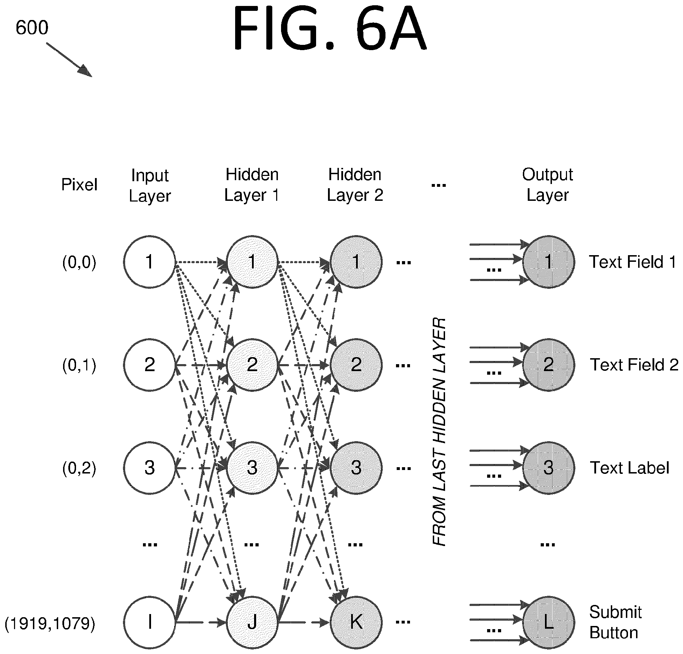

Various types of AI/ML models may be trained and deployed without deviating from the scope of the invention. For instance, FIG. 6A illustrates an example of a neural network 600 that has been trained to recognize graphical elements in an image, according to an embodiment of the present invention. Here, neural network 600 receives pixels of a screenshot image of a 1920 × 1080 screen as input for input "neurons" 1 to I of the input layer. In this case, I is 2,073,600, which is the total number of pixels in the screenshot image.

Neural network 600 also includes a number of hidden layers. Both DLNNs and shallow learning neural networks (SLNNs) usually have multiple layers, although SLNNs may only have one or two layers in some cases, and normally fewer than DLNNs. Typically, the neural network architecture includes an input layer, multiple intermediate layers, and an output layer, as is the case in neural network 600.

A DLNN often has many layers (e.g., 10, 50, 200, etc.) and subsequent layers typically reuse features from previous layers to compute more complex, general functions. A SLNN, on the other hand, tends to have only a few layers and train relatively quickly since expert features are created from raw data samples in advance. However, feature extraction is laborious. DLNNs, on the other hand, usually do not require expert features, but tend to take longer to train and have more layers.

For both approaches, the layers are trained simultaneously on the training set, normally checking for overfitting on an isolated cross-validation set. Both techniques can yield excellent results, and there is considerable enthusiasm for both approaches. The optimal size, shape, and quantity of individual layers varies depending on the problem that is addressed by the respective neural network.

Returning to FIG. 6A, pixels provided as the input layer are fed as inputs to the J neurons of hidden layer 1. While all pixels are fed to each neuron in this example, various architectures are possible that may be used individually or in combination including, but not limited to, feed forward networks, radial basis networks, deep feed forward networks, deep convolutional inverse graphics networks, convolutional neural networks, recurrent neural networks, artificial neural networks, long/short term memory networks, gated recurrent unit networks, generative adversarial networks, liquid state machines, auto encoders, variational auto encoders, denoising auto encoders, sparse auto encoders, extreme learning machines, echo state networks, Markov chains, Hopfield networks, Boltzmann machines, restricted Boltzmann machines, deep residual networks, Kohonen networks, deep belief networks, deep convolutional networks, support vector machines, neural Turing machines, or any other suitable type or combination of neural networks without deviating from the scope of the invention.

Hidden layer 2 receives inputs from hidden layer 1, hidden layer 3 receives inputs from hidden layer 2, and so on for all hidden layers until the last hidden layer provides its outputs as inputs for the output layer. It should be noted that numbers of neurons I, J, K, and L are not necessarily equal, and thus, any desired number of layers may be used for a given layer of neural network 600 without deviating from the scope of the invention. Indeed, in certain embodiments, the types of neurons in a given layer may not all be the same.

Neural network 600 is trained to assign a confidence score to graphical elements believed to have been found in the image. In order to reduce matches with unacceptably low likelihoods, only those results with a confidence score that meets or exceeds a confidence threshold may be provided in some embodiments. For instance, if the confidence threshold is 80%, outputs with confidence scores exceeding this amount may be used and the rest may be ignored. In this case, the output layer indicates that two text fields, a text label, and a submit button were found. Neural network 600 may provide the locations, dimensions, images, and/or confidence scores for these elements without deviating from the scope of the invention, which can be used subsequently by an RPA robot or another process that uses this output for a given purpose.

It should be noted that neural networks are probabilistic constructs that typically have a confidence score. This may be a score learned by the AI/ML model based on how often a similar input was correctly identified during training. For instance, text fields often have a rectangular shape and a white background. The neural network may learn to identify graphical elements with these characteristics with a high confidence. Some common types of confidence scores include a decimal number between 0 and 1 (which can be interpreted as a percentage of confidence), a number between negative $\infty$ and positive $\infty$, or a set of expressions (e.g., "low," "medium," and "high"). Various post-processing calibration techniques may also be employed in an attempt to obtain a more accurate confidence score, such as temperature scaling, batch normalization, weight decay, negative log likelihood (NLL), etc.

"Neurons" in a neural network are mathematical functions that that are typically based on the functioning of a biological neuron. Neurons receive weighted input and have a summation and an activation function that governs whether they pass output to the next layer. This activation function may be a nonlinear thresholded activity function where nothing happens if the value is below a threshold, but then the function linearly responds above the threshold (i.e., a rectified linear unit (ReLU) nonlinearity). Summation functions and ReLU functions are used in deep learning since real neurons can have approximately similar activity functions. Via linear transforms, information can be subtracted, added, etc. In essence, neurons act as gating functions that pass output to the next layer as governed by their underlying mathematical function. In some embodiments, different functions may be used for at least some neurons.

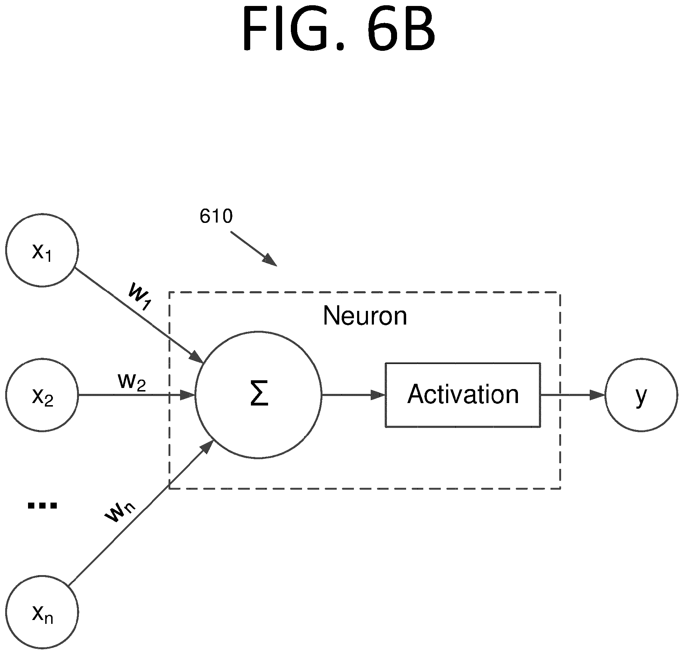

An example of a neuron 610 is shown in FIG. 6B. Inputs $x_1$, $x_2$, ..., $x_n$ from a preceding layer are assigned respective weights $w_1$, $w_2$, ..., $w_n$. Thus, the collective input from preceding neuron 1 is $w_1 x_1$. These weighted inputs are used for the neuron's summation function modified by a bias, such as:

$$\sum_{i=1}^{m} (w_i x_i) + bias \quad (1)$$

This summation is compared against an activation function $f(x)$ to determine whether the neuron "fires". For instance, $f(x)$ may be given by:

$$f(x) = \begin{cases} 1 \text{ if } \sum wx + bias \geq 0 \\ 0 \text{ if } \sum wx + bias < 0 \end{cases} \quad (2)$$

The output $y$ of neuron 710 may thus be given by:

$$y = f(x) \sum_{i=1}^{m} (w_i x_i) + bias \quad (3)$$

In this case, neuron 610 is a single-layer perceptron. However, any suitable neuron type or combination of neuron types may be used without deviating from the scope of the invention. It should also be noted that the ranges of values of the weights and/or the output value(s) of the activation function may differ in some embodiments without deviating from the scope of the invention.

The goal, or "reward function" is often employed, such as for this case the successful identification of graphical elements in the image. A reward function explores intermediate transitions and steps with both short-term and long-term rewards to guide the search of a state space and attempt to achieve a goal (e.g., successful identification of graphical elements, successful identification of a next sequence of activities for an RPA workflow, etc.).

During training, various labeled data (in this case, images) are fed through neural network 600. Successful identifications strengthen weights for inputs to neurons, whereas unsuccessful identifications weaken them. A cost function, such as mean square error (MSE) or gradient descent may be used to punish predictions that are slightly wrong much less than predictions that are very wrong. If the performance of the AI/ML model is not improving after a certain number of training iterations, a data scientist may modify the reward function, provide indications of where non-identified graphical elements are, provide corrections of misidentified graphical elements, etc.

Backpropagation is a technique for optimizing synaptic weights in a feedforward neural network. Backpropagation may be used to "pop the hood" on the hidden layers of the neural network to see how much of the loss every node is responsible for, and subsequently updating the weights in such a way that minimizes the loss by giving the nodes with higher error rates lower weights, and vice versa. In other words, backpropagation allows data scientists to repeatedly adjust the weights so as to minimize the difference between actual output and desired output.

The backpropagation algorithm is mathematically founded in optimization theory. In supervised learning, training data with a known output is passed through the neural network and error is computed with a cost function from known target output, which gives the error for backpropagation. Error is computed at the output, and this error is transformed into corrections for network weights that will minimize the error.

In the case of supervised learning, an example of backpropagation is provided below. A column vector input $x$ is processed through a series of $N$ nonlinear activity functions $f_i$ between each layer $i$ = 1, ..., $N$ of the network, with the output at a given layer first multiplied by a synaptic matrix $W_i$, and with a bias vector $b_i$ added. The network output o, given by

$$o = f_N(W_N f_{N-1}(W_{N-1} f_{N-2}(... f_1(W_1 x + b_1)...) + b_{N-1}) + b_N) \quad (4)$$

In some embodiments, $o$ is compared with a target output $t$, resulting in an error $E = \frac{1}{2}\|o - t\|^2$, which is desired to be minimized.

Optimization in the form of a gradient descent procedure may be used to minimize the error by modifying the synaptic weights $W_i$ for each layer. The gradient descent procedure requires the computation of the output o given an input $x$ corresponding to a known target output $t$, and producing an error o - t. This global error is then propagated backwards giving local errors for weight updates with computations similar to, but not exactly the same as, those used for forward propagation. In particular, the backpropagation step typically requires an activity function of the form $p_j(n_j) = f'_j(n_j)$, where $n_j$ is the network activity at layer $j$ (i.e., $n_j = W_j o_{j-1} + b_j$) where $o_j = f_j(n_j)$ and the apostrophe ' denotes the derivative of the activity function $f$.

The weight updates may be computed via the formulae:

$$d_j = \begin{cases} (o - t) \circ p_j(n_j), & j = N \\ W_{j+1}^{\mathrm{T}} d_{j+1} \circ p_j(n_j), & j < N \end{cases} \quad (5)$$

$$\frac{\partial E}{\partial W_{j+1}} = d_{j+1}(o_j)^{\mathrm{T}} \quad (6)$$

$$\frac{\partial E}{\partial b_{j+1}} = d_{j+1} \quad (7)$$

$$W_j^{\mathrm{new}} = W_j^{\mathrm{old}} - \eta \frac{\partial E}{\partial W_j} \quad (8)$$

$$b_j^{\text{new}} = b_j^{\text{old}} - \eta \frac{\partial E}{\partial b_j} \quad (9)$$

where ∘ denotes a Hadamard product (i.e., the element-wise product of two vectors), $^T$ denotes the matrix transpose, and $o_j$ denotes $f_j(W_j o_{j-1} + b_j)$, with $o_0 = x$. Here, the learning rate $\eta$ is chosen with respect to machine learning considerations. Below, $\eta$ is related to the neural Hebbian learning mechanism used in the neural implementation. Note that the synapses $W$ and b can be combined into one large synaptic matrix, where it is assumed that the input vector has appended ones, and extra columns representing the $b$ synapses are subsumed to $W$.

The AI/ML model may be trained over multiple epochs until it reaches a good level of accuracy (e.g., 97% or better using an F2 or F4 threshold for detection and approximately 2,000 epochs). This accuracy level may be determined in some embodiments using an F1 score, an F2 score, an F4 score, or any other suitable technique without deviating from the scope of the invention. Once trained on the training data, the AI/ML model may be tested on a set of evaluation data that the AI/ML model has not encountered before. This helps to ensure that the AI/ML model is not "over fit" such that it identifies graphical elements in the training data well, but does not generalize well to other images.

In some embodiments, it may not be known what accuracy level is possible for the AI/ML model to achieve. Accordingly, if the accuracy of the AI/ML model is starting to drop when analyzing the evaluation data (i.e., the model is performing well on the training data, but is starting to perform less well on the evaluation data), the AI/ML model may go through more epochs of training on the training data (and/or new training data). In some embodiments, the AI/ML model is only deployed if the accuracy reaches a certain level or if the accuracy of the trained AI/ML model is superior to an existing deployed AI/ML model.

In certain embodiments, a collection of trained AI/ML models may be used to accomplish a task, such as employing an AI/ML model for each type of graphical element of interest, employing an AI/ML model to perform OCR, deploying yet another AI/ML model to recognize proximity relationships between graphical elements, employing still another AI/ML model to generate an RPA workflow based on the outputs from the other AI/ML models, etc. This may collectively allow the AI/ML models to enable semantic automation, for instance.

Some embodiments may use transformer networks such as SentenceTransformers™, which is a Python™ framework for state-of-the-art sentence, text, and image embeddings. Such transformer networks learn associations of words and phrases that have both high scores and low scores. This trains the AI/ML model to determine what is close to the input and what is not, respectively. Rather than just using pairs of words/phrases, transformer networks may use the field length and field type, as well.

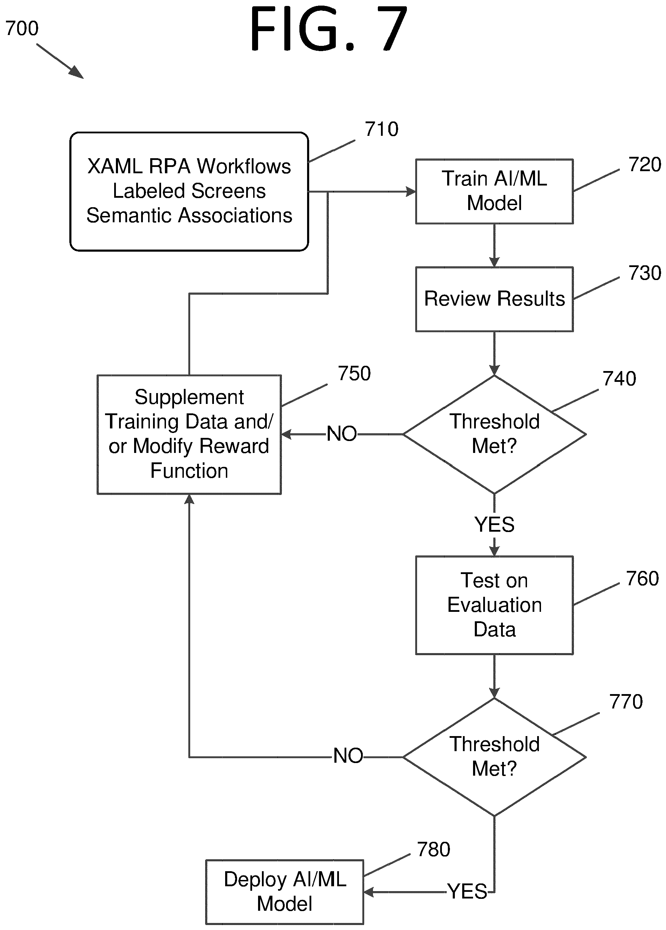

FIG. 7 is a flowchart illustrating a process 700 for training AI/ML model(s), according to an embodiment of the present invention. The process begins with providing training data, for instance, labeled data as shown in FIG. 7, such as labeled screens (e.g., with graphical elements and text identified), words and phrases, a "thesaurus" of semantic associations between words and phrases such that similar words and phrases for a given word or phrase can be identified, etc. at 710. The nature of the training data that is provided will depend on the objective that the AI/ML model is intended to achieve. The AI/ML model is then trained over multiple epochs at 720 and results are reviewed at 730.

If the AI/ML model fails to meet a desired confidence threshold at 740, the training data is supplemented and/or the reward function is modified to help the AI/ML model achieve its objectives better at 750 and the process returns to step 720. If the AI/ML model meets the confidence threshold at 740, the AI/ML model is tested on evaluation data at 760 to ensure that the AI/ML model generalizes well and that the AI/ML model is not over fit with respect to the training data. The evaluation data may include screens, source data, etc. that the AI/ML model has not processed before. If the confidence threshold is met at 770 for the evaluation data, the AI/ML model is deployed at 780. If not, the process returns to step 750 and the AI/ML model is trained further.

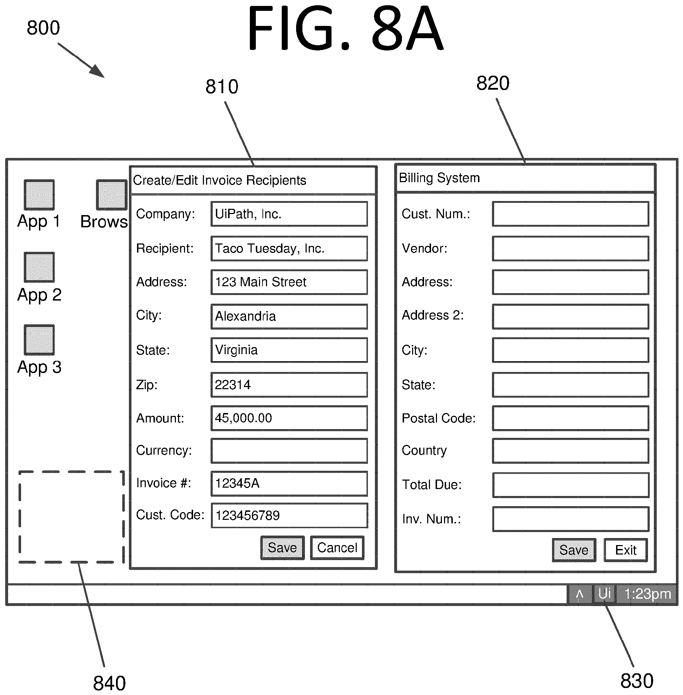

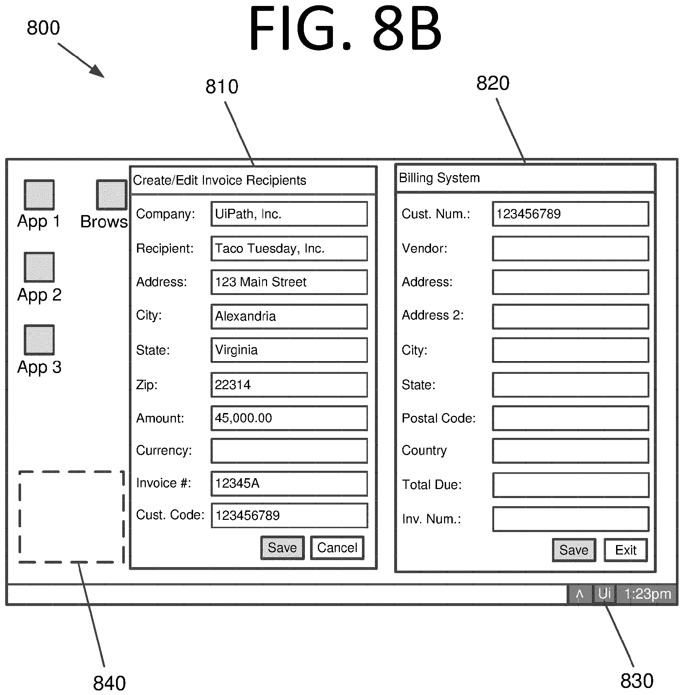

FIGS. 8A-G illustrate an example of a user manually performing a data entry ("copy-and-paste") operation between two forms 810, 820 on a user interface 800 of a computing system, a copy-and-paste task being recognized and automatically completed, and an associated automation being automatically generated, according to an embodiment of the present invention. Referring to FIGS. 8A and 8B, a robot tray 830 allows the user to select automations for execution by an RPA robot. In this embodiment, RPA robot 840 is performing listener functionality. However, in some embodiments, this automation may be run automatically without the user manually selecting it from robot tray 830. In certain embodiments, the listener functionality is performed by other software than an RPA robot, such as part of an operating system, a downloadable application for the respective computing system, etc. In some embodiments, the listener may be listener 110 of FIG. 1, for example.

RPA robot 840, in its function as a listener, may record time-ordered screenshots, graphical elements in UI 800, key presses made by the user, times and locations of mouse clicks, the active element in the UI that the user has selected at a given time, the cursor location, currently running applications, windows, the active window, etc. See, for example, U.S. Patent No. 11,080,548. In some embodiments, information may be obtained via APIs from the operating system and/or application(s) that are currently running. The information may be obtained in real-time or near-real time in some embodiments so the actions of the user can be processed on the fly. However, in certain embodiments, the information is saved to a database, such as database 140 of FIG. 1, for subsequent use.

UI 800 includes a create/edit invoice recipients form 810 and a billing system form 820. Both are shown as their own "windows" in this embodiment. The user manually enters values into billing system form 820 that match values in create/edit invoice recipients form 810, copies-and-pastes values (e.g., using CTRL+C followed by CTRL+V) from create/edit invoice recipients form 810 into billing system form 820, or both. As these actions are occurring, RPA robot 840 is recording the screen images and underlying system information.

Over time, information pertaining to user interactions with the computing system is collected. Information from interactions of other users with their respective computing systems may be collected as well. This information may be analyzed to search for copy-and-paste operations. For instance, cloud-based analysis may be performed on the collected data to search for instances where values from one or more screens or forms appeared in one or more other screens or forms. The relationship may be one-to-multiple, multiple-to-one, or multiple-to-multiple. In such instances, one or more data structures may be used to capture the information of the collective source and/or the information of the collective target. Identified copy-and-paste tasks in the task mining data may be treated as accurate, per the above. This information is then used to train a mapping model that maps.

It is possible that users may not always be correct when copying information (e.g., users may copy to the wrong field, type an incorrect value, etc.), and thus, some embodiments do not consider user copy-and-paste actions to be 100% accurate. To account for this, such embodiments may wait until the copy-and-paste operation is observed a second time, a third time, etc. in the task mining data or runtime deployed operation, check the copy-and-paste values for the fields of these multiple operations, and then take the most common action as the correct one. The certainty level for such an approach increases with the number of instances that were observed. A threshold for a minimum amount of time before suggesting copy-and-paste automation to user could be required in some embodiments.

In some embodiments, task mining may be performed before training and deployment of a semantic matching AI/ML model to identify and automate copy-and-paste tasks to provide increased accuracy. However, in some embodiments, an initial version of the semantic matching AI/ML model is deployed that has been trained on other data, such as BERT or GPT-3 trained from a large internet corpus. The listener automation, another automation executed by RPA robot 840 as a separate process, an automation executed by a different RPA robot, or some other process may detect that a value entered by a user in a screen or form matches another value in another screen or form. This may be accomplished by using an API to retrieve visible values from open applications or by using CV. However, the former may be considerably faster than the latter.

A single detected field value match may be treated as evidence that a copy-and-paste operation may be in progress in some embodiments. Otherwise, two field value matches, three field value matches, etc. may be required as a detection threshold. The initial version of the semantic matching AI/ML model may then be used to match corresponding labels for respective fields having the values from the suspected source to the suspected target. This may be performed using techniques such as those disclosed in U.S. Patent Nos. 10,936,351 and 11,200,073 in some embodiments.

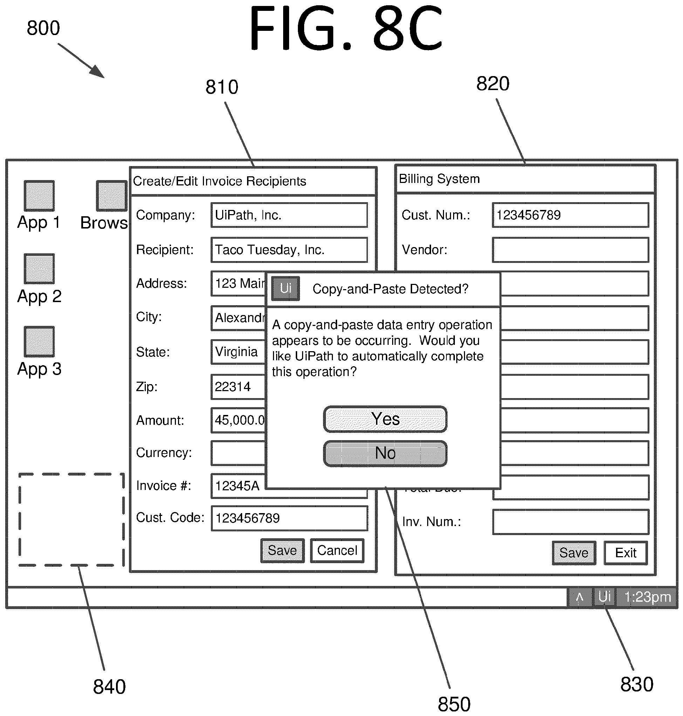

The corresponding labels for matching value(s) in the source and the target may be fed into a semantic matching NPL model, which produces a similarity score. If the similarity score(s) for the matched value(s) in the source and the target meet or exceed a similarity threshold, or a majority, 75%, 90%, etc. of the values match, the user may be prompted as to whether autocompletion is desired, such as via prompt 850 of FIG. 8C. If the user desires this operation, labels associated with field values in the source (whether one screen/form or multiple screens/forms) may be compared to labels associated with empty fields in the target (also whether one screen/form or multiple screens/forms) to determine whether matches are found in the target. For instance, currently unmatched labels in the target may be fed into the semantic matching AI/ML model as a pair with the source label and the target label with the highest matching score may be selected. Alternatively, target labels may be checked until a certain threshold is met, potentially the semantic matching threshold or another threshold (e.g., a higher threshold may be required to associate a label without checking others). Fields associated with matching labels in the target may then be populated with associated values from the source. This may be accomplished by setting the associated field in the target to being the active element (e.g., by simulating a mouse click on that field) and entering the value into the field (e.g., by simulating key press events for numbers, letters, and/or symbols in the value).

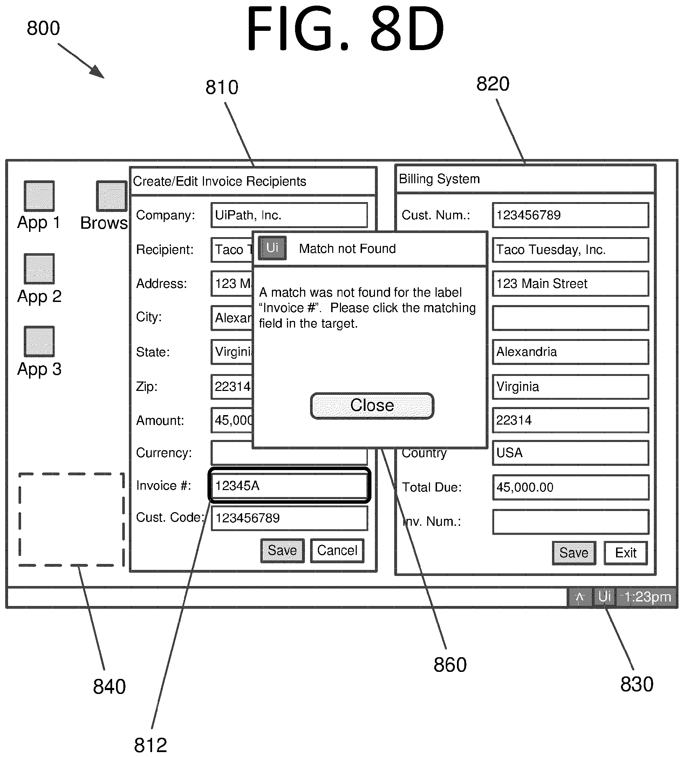

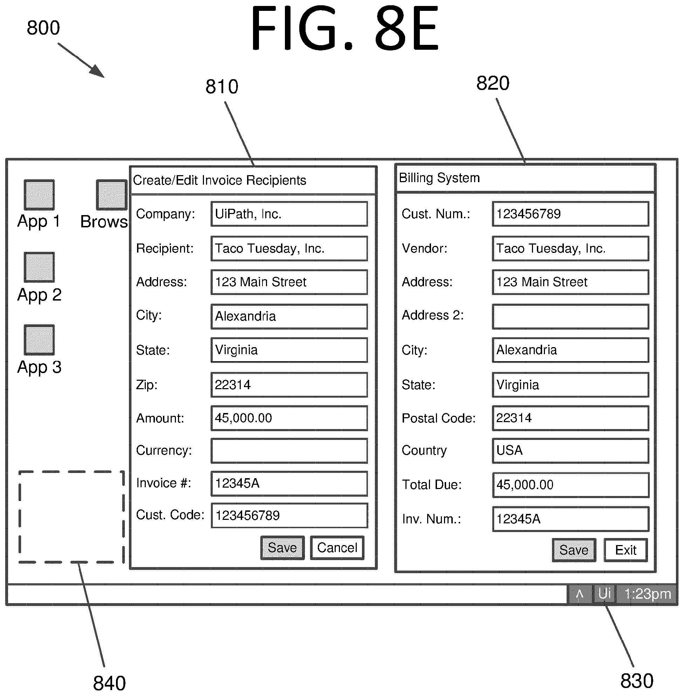

It is possible that scores for all labels in the source and target will not meet the semantic matching threshold. In this example, the label "Invoice #" in the source was not matched to the label "Inv. Num." in the target, and the field is highlighted 812. See FIG. 8D. The user may be provided with a prompt, such as prompt 860, requesting that the user indicate the matching field in the target. The user can then click the appropriate field in the target, and the value is entered automatically. Information pertaining to the correction, such as the matching labels of the source and the target, may be collected for retraining the semantic matching AI/ML model. If matches were found for all labels having values in the source, or once the user indicates the matching field(s) in the target, the copy-and-paste operation is completed. See FIG. 8E.

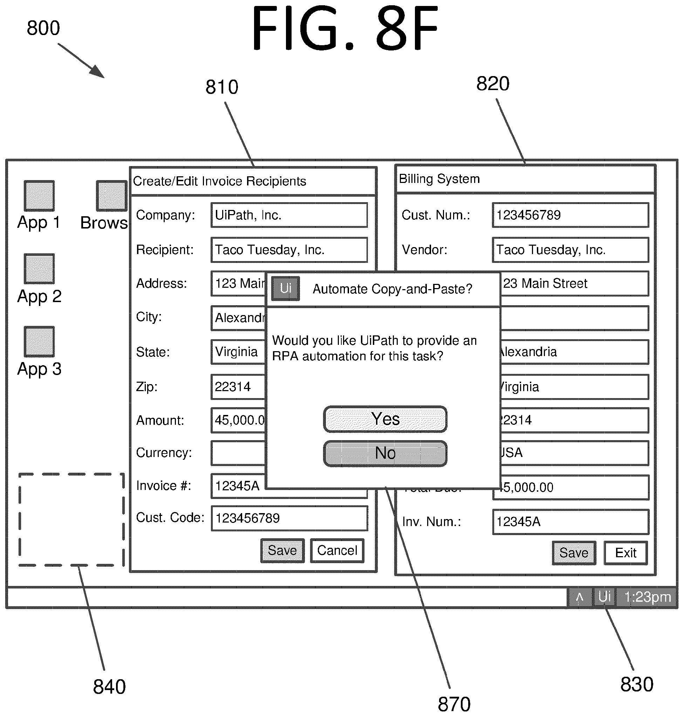

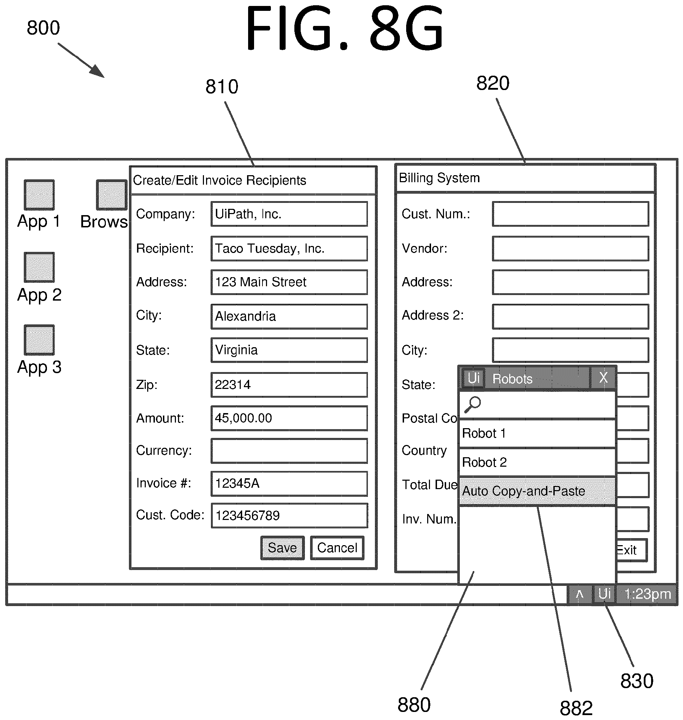

The copy-and-paste task may be performed by the user on a regular basis. Accordingly, in some embodiments, the user may be provided an option to have an automation automatically generated. Such a scenario is shown in FIG. 8F, where a user is provided with a prompt 870 regarding whether to automatically generate an automation. If the user chooses to have the automation created, an RPA workflow and associated runtime automation may be generated, and the automation may be deployed to the user's computing system or otherwise made available to the user. The next time the user wishes to perform the copy-and-paste operation, the user can click on robot tray 830 and select the associated automation 882 from automation list 880. See FIG. 8G.

The information to create the RPA workflow for the copy-and-paste task may be derived from task mining and the semantic matching AI/ML model. By watching the fields that the user completes and the matches from the semantic matching AI/ML model, the matching fields in the source and the target may be determined and activities may be automatically created that enter the desired information into the appropriate fields in the target. This functionality may be similar to that provided by an RPA designer application such as UiPath Studio™, for example. The RPA designer application may be launched and the workflow generated for review by the user therein. Alternatively, the workflow may be automatically generated and the associated automation may be created without a graphical display for the user using underlying functionality of the RPA designer application. In some embodiments, the workflow and automation may be generated by a different computing system than that of the user. In certain embodiments, the workflow may be provided to an RPA developer for verification prior to generation and deployment of the automation. However, as the semantic matching AI/ML model becomes more accurate with further training over time, the proposed RPA workflow may become accurate enough that it can be deployed as an automation for execution by an RPA robot automatically without developer review.

Data pertaining to copy-and-paste operations from task mining may be used to train or retrain a semantic matching AI/ML model. The data may include corresponding labels for fields from the source and the target. In some embodiments, UI descriptor/selector information may be useful to get precise fields, labels of fields, screenshots, etc. In virtual environments, there may be no descriptors/selectors since the user's computing system is receiving a stream of images from a server. However, fields and labels may still be obtained using CV and its descriptors. This may also be useful to get the actual data in the specific fields for the source and destination so the mapping of which data went where can be obtained. In certain embodiments, this could theoretically be done based only on the actions themselves, but this may add another layer of certainty. This information may become part of the training dataset. Human labeling may not be required in some embodiments since the information may be considered to be validated by the user(s) that entered the information.

A process similar to that of FIG. 7 may then be followed to train or retrain the semantic matching AI/ML model. The AI/ML model may be trained/retrained over one or more epochs and once a desired average confidence is achieved, an evaluation dataset that the AI/ML model has not seen before may be used to verify that the AI/ML model works well or, in the case of retraining, that the retrained AI/ML model works better than its predecessor. The trained or retrained AI/ML model may then be deployed to user computing systems for runtime use. The retraining process may occur periodically after a certain amount of time passes, a certain amount of task mining data is collected, etc.

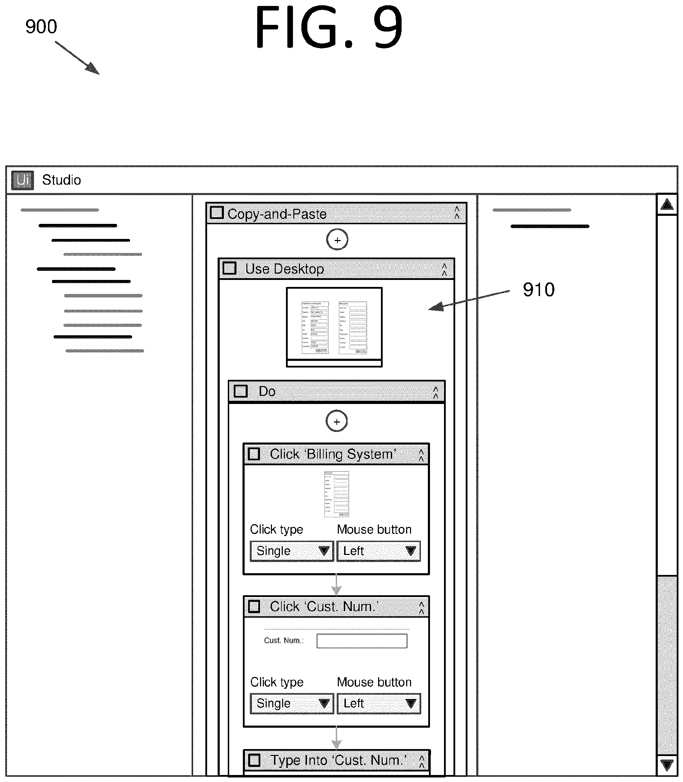

FIG. 9 illustrates an RPA designer application 900 with an automatically generated RPA workflow 910, according to an embodiment of the present invention. In this example, RPA workflow 910 is automatically generated based on the task mining and semantic matching discussed above. RPA workflow 910 is populated with activities that enter the source values into the target. For instance, the workflow includes activities for clicking on the "Billing System" target form, clicking on the "Cust. Num." field, typing the appropriate value into the "Cust. Num." field, etc.

Screenshots, system information, and/or information from semantic matching AI/ML model(s) may be used in some embodiments for automatically generating new activities for a previously unidentified task. For instance, such information may be used to create UI descriptors for activities that enable an RPA robot executing workflow actions to interact with UI elements on a screen (e.g., text fields, buttons, labels, menus, checkboxes, etc.).

Some embodiments use the information noted above to create selectors for activities. Selectors are a type of UI descriptor that may be used to detect UI elements in some embodiments. A selector has the following structure in some embodiments:

...

The last node represents the GUI element of interest, and all previous nodes represent the parents of that element. <node_1> is usually referred to as a root node and represents the top window of the application.

Each node may have one or more attributes that assist with correct identification of a specific level of the selected application. Each node has the following format in some embodiments:

<ui_system attr_name_1='attr_value_1' ... attr_name_N='attr_value_N'/>

Every attribute may have an assigned value, and attributes with constant values may be selected. This is because changes to the value of an attribute each time the application is started may lead to the selector not being able to correctly identify the associated element.

UI descriptors in some embodiments are an encapsulated data/struct format that includes UI element selector(s), anchor selector(s), CV descriptor(s), unified target descriptor(s), a screen image capture (context), an element image capture, other metadata (e.g., the application and application version), a combination thereof, etc. The encapsulated data/struct format may be extensible with future updates to the platform and is not limited to the above definition. Any suitable UI descriptor for identifying a UI element on a screen may be used without deviating from the scope of the invention. A unified target descriptor chains together multiple types of UI descriptors. A unified target descriptor may function like a finite state machine (FSM), where in a first context, a first UI descriptor mechanism is applied, in a second context, a second UI descriptor is applied, etc.

In some embodiments, fuzzy matching may be employed, where one or more attributes should match with a certain accuracy (e.g., a 70% match, an 80% match, a 99% match, etc.), within a certain range, using string metrics (e.g., a Levenshtein distance, a Hamming distance, a Jaro-Winkler distance, etc.), a combination thereof, etc. One of ordinary skill in the art will appreciate that the similarity measure may quantify an amount of similarity, as well as an amount of mismatch between two attribute values. Furthermore, in various embodiments, the similarity threshold may represent a maximum amount of mismatch or a minimum amount of similarity required for a match.

Depending on the chosen manner of computing the similarity measure, the similarity threshold can have various interpretations. For instance, the similarity threshold may indicate a maximum count of characters that can differ between the two strings or a fractional degree of mismatch calculated as a proportion of the total count of characters (e.g., combined string length). In some embodiments, the similarity threshold may be re-scaled to a predetermined interval, such as between 0 and 1, between 0 and 100, between 7 and 34, etc. In one nonlimiting example, a relatively high similarity threshold (e.g., close to 1 or 100%) indicates a requirement for an almost exact match, i.e., the value of the fuzzy attribute in the runtime target is only allowed to depart very slightly from the value of the respective attribute in the design time target. In contrast, when the similarity threshold is relatively low (e.g., close to 0), almost any values of the respective fuzzy attribute are considered as matching.

In certain embodiments, the matching tolerance may differ on a per-attribute basis. For instance, an exact match may be required for one or more attributes (e.g., it may be desired to find a certain exact name) and fuzzy matching may be performed for one or more other attributes. The number and/or type of attributes used from each graphical element detection technique may be custom-specified by the RPA developer in some embodiments.

In some embodiments, attributes may be stored as attribute-value pairs and/or attribute-value-tolerance pairs (e.g., fuzzy matching). Attribute-value pairs may indicate a name and a type of UI element represented by the respective node in some embodiments. However, one skilled in the art will appreciate that there may be multiple ways to represent a location of a specific node within a UI tree other than a list of attribute-value pairs without deviating from the scope of the invention.

These attribute-value pairs and/or attribute-value-tolerance pairs may be stored in a tag in some embodiments, and each tag may include a sequence of characters with the sequence book-ended by implementation-specific delimiters (e.g., beginning with "<" and ending with "/>"). Attribute-value pairs may indicate a name and a type of UI element represented by the respective node in some embodiments. However, one skilled in the art will appreciate that there may be multiple ways to represent a location of a specific node within a UI tree other than a list of attribute-value pairs without deviating from the scope of the invention.

To enable a successful and ideally unambiguous identification by an RPA robot, some embodiments represent each UI element using an element ID characterizing the respective UI element. The element ID in some embodiments indicates a location of a target node within a UI tree, where the target node represents the respective UI element. For instance, the element ID may identify a target node/UI element as a member of a selected subset of nodes. The selected subset of nodes may form a genealogy, i.e., a line of descent through the UI tree where each node is either an ancestor or a descendant of another node.

In some embodiments, the element ID includes an ordered sequence of node indicators, the sequence tracing a genealogical path through the UI tree, and the path ending in the respective target node/UI element. Each node indicator may represent a member of an object hierarchy of the respective UI and its position within the sequence consistent with the respective hierarchy. For instance, each member of the sequence may represent a descendant (e.g., a child node) of the previous member, and may have the following member as a descendant (e.g., a child node). In one HyperText Markup Language (HTML) example, an element ID representing an individual form field may indicate that the respective form field is a child of an HTML form, which in turn is a child of a specific section of a webpage, etc. The genealogy does not need to be complete in some embodiments.

Some embodiments may use one or more multi-anchor matching attributes. Anchors are other UI elements that can be used to assist in uniquely identifying a target UI element. For instance, if multiple text fields are included in a UI, searching for a text field alone is insufficient to uniquely identify a given text field. Accordingly, some embodiments look for additional information in order to uniquely identify a given UI element. Using the text field example, a text field for entering a first name may appear to the right of the label "First Name". This first name label may be set as an "anchor" to help to uniquely identify the text field, which is the "target".

Various positional and/or geometric associations between the target and the anchor may be used in some embodiments, potentially within one or more tolerances, to uniquely identify the target. For instance, the center of bounding boxes for the anchor and the target may be used to define a line segment. This line segment could then be required to have a certain length within a tolerance and/or slope within a tolerance to uniquely identify the target using the target/anchor pair. However, any desired position of the location associated with the target and/or anchors may be used in some embodiments without deviating from the scope of the invention. For instance, the point for drawing line segments may be in the center, upper left corner, upper right corner, lower left corner, lower right corner, any other location on the border of the bounding box, any location within the bounding box, a location outside of the bounding box as identified in relation to the bounding box properties, etc. In certain embodiments, the target and one or more anchors may have different locations within or outside of their bounding boxes that are used for geometric matching.

Per the above, a single anchor may not always be sufficient to uniquely identify a target element on a screen with a certain confidence. For instance, consider a web form where two text field for entering a first name appear to the right of respective labels "First Name" in different locations on the screen. In this example, one or more additional anchors may be useful to uniquely identify a given target. The geometric properties between the anchors and the target (e.g., line segment lengths, angles, and/or relative locations with tolerances) may be used to uniquely identify the target. The user may be required to continue to add anchors until a match strength for the target exceeds the threshold.

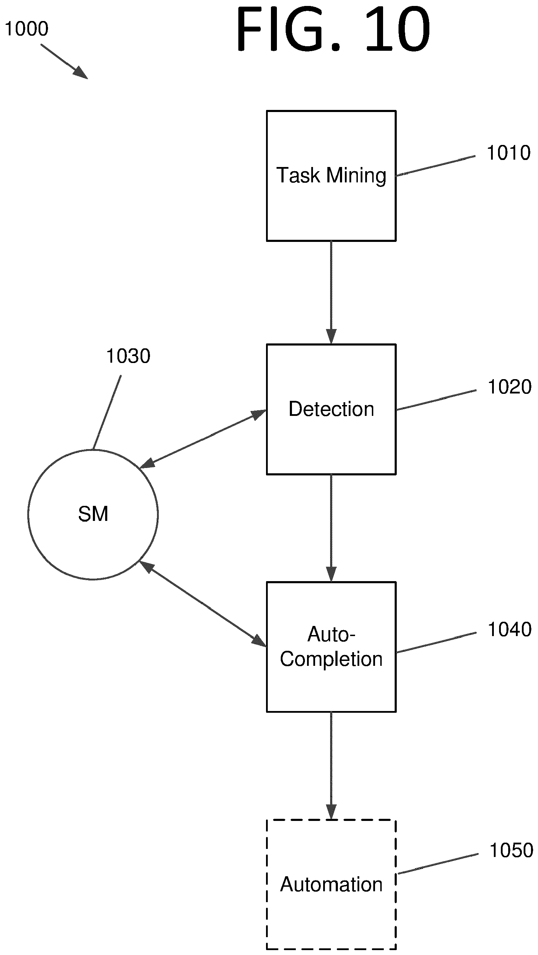

FIG. 10 generally illustrates modules 1000 for performing AI-driven, semantic, automatic data transfer between a source and a target using task mining, according to an embodiment of the present invention. A task mining module 1010 monitors user interactions with a computing system and provides information to a detection module 1020 that seeks to identify that a copy-and-paste operation is in progress. The task mining information may include, but is not limited to, labels, fields, and values in screens or forms, associated applications and windows, information from the operating system, information from application API(s), etc.

Detection module 1020 checks values in screens or forms in the UI match, potentially including those that are not currently visible due to being minimized or blocked by another window. When a match is found, detection module 1020 determines associated labels in the respective source or target screens or forms where the value was found and feeds these to a semantic matching AI/ML model 1030. If the score output by semantic matching AI/ML model 1030 meets or exceeds a matching threshold, detection module 1020 deems that a match is detected. While a single match is sufficient in some embodiments, this process may be repeated until a threshold number of matches is found.

After the threshold number of matches is detected by detection module 1020, an autocompletion module 1040 prompts the user regarding whether autocompletion is desired or performs autocompletion of the remaining fields in the target automatically. Like detection module 1020, autocompletion module 1040 provides semantic matching AI/ML model 1030 with the source field label. However, for the second value of the pair, autocompletion module 1040 provides semantic matching AI/ML model 1030 with an unmatched label from the target having an empty field. Autocompletion model receives the score from semantic matching AI/ML model 1030 for that pair and repeats the process until all pairs have been checked (selecting the highest score meeting the matching threshold, if any) or until a score meets an automatic match detection threshold. This may be the threshold for detecting that a match exists or a higher threshold to be confident enough in the result to skip checking other pairs.

After the target has been automatically filled in, an associated RPA automation may be created by automation module 1050. This may be responsive to user approval or automatic with no user involvement. The automation may be deployed to the user computing system or otherwise be made available to the user so the same copy-and-paste task may be performed automatically in the future.

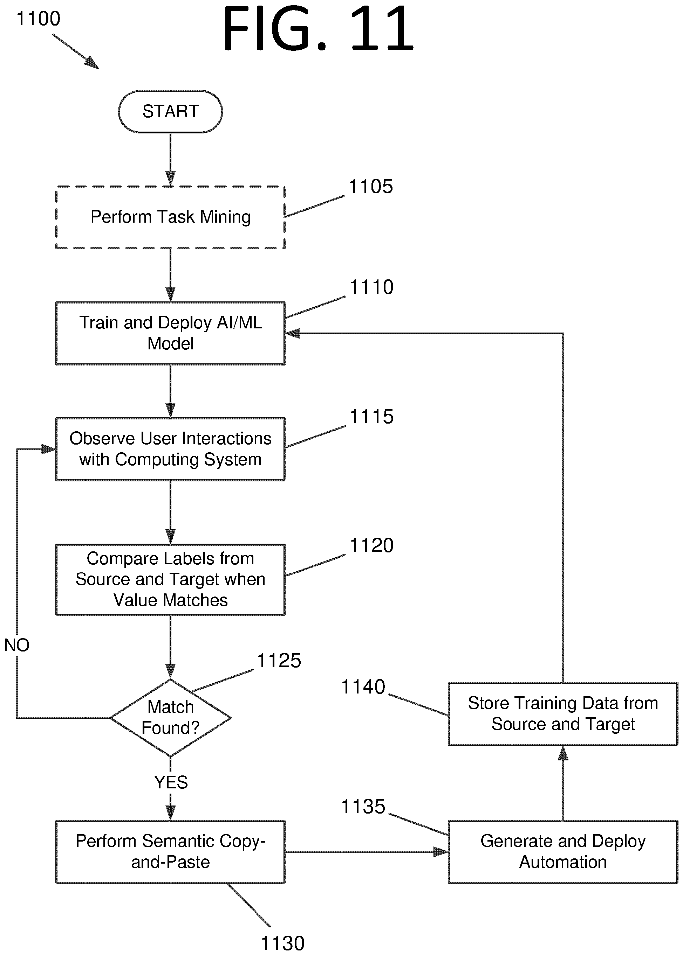

FIG. 11 is a flowchart illustrating a process 1100 for performing AI-driven, semantic, automatic data transfer between a source and a target using task mining, according to an embodiment of the present invention. The process beings with performing task mining on user computing systems at 1105 (e.g., by a listener). Task mining may include monitoring user interactions with the computing systems, which applications are running, which windows are open, which UI element is the active element, etc. However, in some embodiments, task mining is not performed prior to training and deployment of an initial semantic matching AI/ML model.

The initial semantic matching AI/ML model is trained and deployed at 1110. For instance, task mining data may be recorded for a few weeks, a few months, etc. and then the AI/ML model is trained on this data. The initial semantic AI/ML model may be trained using a corpus of data from the Internet and/or some other text source (e.g., books, documents, etc.). In some embodiments, the initial AI/ML model is also trained using the task mining data, such as labels in a source and target that are different from one another but match (i.e., they are semantically similar). In certain embodiments, the AI/ML model may be trained only using task mining data, and training of such a mapping model may occur automatically.

In some embodiments, the source, the target, or both, may be a web form, a document, whether digital or scanned (such as an invoice, a receipt, a report, handwritten information, etc.), an image, an application GUI, a spreadsheet, or any other suitable information format without deviating from the scope of the invention, whether structured or unstructured. OCR may be performed on the source and/or the target before performing semantic copy-and-paste functionality. In certain embodiments, the source and the target may be of different types. For instance, the source may be a web form and the target may be a spreadsheet.

After deployment of the initial trained AI/ML model, user interactions with a respective computing system are observed at 1115. When a value in the source and the target match, associated labels from the source and target are compared at 1120 by running the labels through the initial semantic matching AI/ML model as input and checking a matching score output from the AI/ML model against a matching threshold. It should be noted it is possible that a value will match in the source and the target, but one or both do not have an associated label. In that case, the match may be ignored. This matching operation may be performed until a requisite number of matches is found to be confident enough that a copy-and-paste task is occurring (e.g., one match, two matches, five matches, etc.).

If the matching threshold is not met at 1125 for the desired number of confirmatory matches, the process returns to observing user interactions with the computing system at 1115. However, if the labels for the source and target match, a semantic copy-and-paste operation is performed at 1130. The user may be prompted first, or this operation may be performed automatically. For each label-value pair in the source, the target may be searched for an associated label and field that has not been matched before. To determine a label match, the semantic AI/ML model is used, and the label comparison continues until all pairs have been checked (selecting the highest score meeting the matching threshold, if any) or until a score meets an automatic match detection threshold. This may be the threshold for detecting that a match exists or a higher threshold to be confident enough in the result to skip checking other pairs.

After the target has been automatically filled in, an associated RPA automation is generated and deployed at 1135, either after receiving confirmation from a user prompt or automatically. The automation is then available to the user for future use. Training data for retraining the semantic matching AI/ML model is stored at 1140, and a new version of the semantic matching AI/ML model is retrained and deployed at 1110.

The process steps performed in FIG. 11 may be performed by a computer program, encoding instructions for the processor(s) to perform at least part of the process(es) described in FIG. 11, in accordance with embodiments of the present invention. The computer program may be embodied on a non-transitory computer-readable medium. The computer-readable medium may be, but is not limited to, a hard disk drive, a flash device, RAM, a tape, and/or any other such medium or combination of media used to store data. The computer program may include encoded instructions for controlling processor(s) of a computing system (e.g., processor(s) 510 of computing system 500 of FIG. 5) to implement all or part of the process steps described in FIG. 11, which may also be stored on the computer-readable medium.

The computer program can be implemented in hardware, software, or a hybrid implementation. The computer program can be composed of modules that are in operative communication with one another, and which are designed to pass information or instructions to display. The computer program can be configured to operate on a general purpose computer, an ASIC, or any other suitable device.

It will be readily understood that the components of various embodiments of the present invention, as generally described and illustrated in the figures herein, may be arranged and designed in a wide variety of different configurations. Thus, the detailed description of the embodiments of the present invention, as represented in the attached figures, is not intended to limit the scope of the invention as claimed, but is merely representative of selected embodiments of the invention.

The features, structures, or characteristics of the invention described throughout this specification may be combined in any suitable manner in one or more embodiments. For example, reference throughout this specification to "certain embodiments," "some embodiments," or similar language means that a particular feature, structure, or characteristic described in connection with the embodiment is included in at least one embodiment of the present invention. Thus, appearances of the phrases "in certain embodiments," "in some embodiment," "in other embodiments," or similar language throughout this specification do not necessarily all refer to the same group of embodiments and the described features, structures, or characteristics may be combined in any suitable manner in one or more embodiments.

It should be noted that reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussion of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize that the invention can be practiced without one or more of the specific features or advantages of a particular embodiment. In other instances, additional features and advantages may be recognized in certain embodiments that may not be present in all embodiments of the invention.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

**Claims**

1. A non-transitory computer-readable medium storing a computer program, the computer program configured to cause at least one processor to:

   check for matches between values in a source and a target in a user interface (UI) using recorded data pertaining to user interactions with a computing system; and
   validate the matches by:

   identify labels associated with fields comprising the value in the source and the target,
   provide the labels from the source and the target to a semantic matching artificial intelligence (AI) / machine learning (ML) model as input,
   receive a matching score from the semantic matching AI/ML model as output, and
   check the matching score against a matching threshold.

2. The non-transitory computer-readable medium of claim 1, wherein when the matching score exceeds the matching threshold, the computer program is further configured to cause the at least one processor to:
   automatically copy values associated with respective labels from the source to fields associated with corresponding semantically matched labels in the target.

3. The non-transitory computer-readable medium of claim 2, wherein the computer program is further configured to cause the at least one processor to:
   send the matched labels from the source and the target to be stored and used for retraining of the semantic matching AI/ML model.

4. The non-transitory computer-readable medium of claim 3, wherein the computer program is further configured to cause the at least one processor to:

   receive a retrained version of the semantic matching AI/ML model that has been retrained, in part, using the matched labels from the source and the target; and
   deploy the retrained version of the semantic matching AI/ML model.

5. The non-transitory computer-readable medium of claim 2, wherein the computer program is further configured to cause the at least one processor to:
   generate a robotic process automation (RPA) workflow that performs the automatic copying of the values associated with the respective labels from the source to the fields associated with the corresponding semantically matched labels in the target.

6. The non-transitory computer-readable medium of claim 5, wherein the computer program is further configured to cause the at least one processor to:

   generate an automation for the RPA workflow; and
   deploy the automation to the computing system.

7. The non-transitory computer-readable medium of claim 1, wherein when the matching score exceeds the matching threshold, the computer program is further configured to cause the at least one processor to:

   determine labels in the source that have corresponding values and have not been previously matched to labels in the target;
   determine labels in the target that have associated empty fields; and
   for each unmatched label in the source having a corresponding value:

   run the unmatched label in the source and each unmatched label from the target through the semantic matching AI/ML model in pairs,
   select a highest matching score output by the semantic matching AI/ML model, and

when the highest matching score meets or exceeds the matching threshold:
enter a value corresponding to a label from the source for the pair associated with the highest matching score into a field associate with an associated label of the pair from the target.

8. The non-transitory computer-readable medium of claim 1, wherein when the matching score exceeds the matching threshold, the computer program is further configured to cause the at least one processor to:

determine labels in the source that have corresponding values and have not been previously matched to labels in the target;
determine labels in the target that have associated empty fields; and
for each unmatched label in the source having a corresponding value:

run the unmatched label in the source and each unmatched label from the target through the semantic matching AI/ML model in pairs until the semantic matching AI/ML model outputs a matching score that meets or exceeds an automatic identification threshold, and
enter a value corresponding to a label from the source for the pair associated with the matching score into a field associate with an associated label of the pair from the target.

9. The non-transitory computer-readable medium of claim 8, wherein the automatic identification threshold is higher than the matching threshold.

10. The non-transitory computer-readable medium of claim 1, wherein the validation is repeated until at the matching score for at least one additional match meets or exceeds the matching threshold.

11. A computer-implemented method, comprising:

checking, by a computing system, for matches between values in a source and a target in a user interface (UI) using recorded data pertaining to user interactions with a computing system;
validating the matches, by the computing system, by providing labels associated with fields comprising the matched values in the source and the target to a semantic matching artificial intelligence (AI) / machine learning (ML) model as input, receiving a matching score from the semantic matching AI/ML model as output, and checking the matching score against a matching threshold; and
automatically copying values associated with respective labels from the source to fields associated with corresponding semantically matched labels in the target where the matching score exceeds the matching threshold, by the computing system.

12. The computer-implemented method of claim 11, further comprising:
sending the matched labels from the source and the target to be stored and used for retraining of the semantic matching AI/ML model, by the computing system.

13. The computer-implemented method of claim 12, further comprising:

receiving a retrained version of the semantic matching AI/ML model that has been retrained, in part, using the matched labels from the source and the target, by the computing system; and
deploying the retrained version of the semantic matching AI/ML model, by the computing system.

14. The computer-implemented method of claim 11, further comprising:
generating a robotic process automation (RPA) workflow that performs the automatic copying of the values associated with the respective labels from the source to the fields associated with the corresponding semantically matched labels in the target.

15. The computer-implemented method of claim 14, further comprising:

generating an automation for the RPA workflow; and
deploying the automation to the computing system.

16. The computer-implemented method of claim 11, wherein when the matching score exceeds the matching threshold, the method further comprises:

determining labels in the source that have corresponding values and have not been previously matched to labels in the target, by the computing system;

determining labels in the target that have associated empty fields, by the computing system; and

for each unmatched label in the source having a corresponding value:

running the unmatched label in the source and each unmatched label from the target through the semantic matching AI/ML model in pairs, by the computing system,

selecting a highest matching score output by the semantic matching AI/ML model, by the computing system, and

when the highest matching score meets or exceeds the matching threshold:

entering a value corresponding to a label from the source for the pair associated with the highest matching score into a field associate with an associated label of the pair from the target, by the computing system.

17. The computer-implemented method of claim 11, wherein when the matching score exceeds the matching threshold, the method further comprises:

determining labels in the source that have corresponding values and have not been previously matched to labels in the target, by the computing system;

determining labels in the target that have associated empty fields, by the computing system; and

for each unmatched label in the source having a corresponding value:

running the unmatched label in the source and each unmatched label from the target through the semantic matching AI/ML model in pairs until the semantic matching AI/ML model outputs a matching score that meets or exceeds an automatic identification threshold, by the computing system, and

entering a value corresponding to a label from the source for the pair associated with the matching score into a field associate with an associated label of the pair from the target, by the computing system.

18. The computer-implemented method of claim 17, wherein the automatic identification threshold is higher than the matching threshold.

19. The computer-implemented method of claim 11, wherein the validation is repeated until at the matching score for at least one additional match meets or exceeds the matching threshold.

20. A computing system, comprising:

memory storing computer program instructions; and

at least one processor configured to execute the computer program instructions,

wherein the computer program instructions are configured to cause the at least one processor to:

validate matches between values in a source and a target in a user interface (UI) using recorded data pertaining to user interactions with the UI by providing labels associated with fields comprising the matched values in the source and the target to a semantic matching artificial intelligence (AI) / machine learning (ML) model as input, receiving a matching score from the semantic matching AI/ML model as output, and checking the matching score against a matching threshold; and

automatically copy values associated with respective labels from the source to fields associated with corresponding semantically matched labels in the target where the matching score exceeds the matching threshold.

21. The computing system of claim 20, wherein the computer program instructions are further configured to cause the at least one processor to:

send the matched labels from the source and the target to be stored and used for retraining of the semantic matching AI/ML model.

22. The computing system of claim 21, wherein the computer program instructions are further configured to cause the at least one processor to:

receive a retrained version of the semantic matching AI/ML model that has been retrained, in part, using the matched labels from the source and the target; and

deploy the retrained version of the semantic matching AI/ML model.

23. The computing system of claim 20, wherein the computer program instructions are further configured to cause the at least one processor to:

generate a robotic process automation (RPA) workflow that performs the automatic copying of the values associated with the respective labels from the source to the fields associated with the corresponding semantically matched labels in the target.

24. The computing system of claim 23, wherein the computer program instructions are further configured to cause the at least one processor to:

generate an automation for the RPA workflow; and
deploy the automation to the computing system.

25. The computing system of claim 20, wherein when the matching score exceeds the matching threshold, the computer program instructions are further configured to cause the at least one processor to:

determine labels in the source that have corresponding values and have not been previously matched to labels in the target;
determine labels in the target that have associated empty fields; and
for each unmatched label in the source having a corresponding value:

run the unmatched label in the source and each unmatched label from the target through the semantic matching AI/ML model in pairs,
select a highest matching score output by the semantic matching AI/ML model, and
when the highest matching score meets or exceeds the matching threshold:
enter a value corresponding to a label from the source for the pair associated with the highest matching score into a field associate with an associated label of the pair from the target.

26. The computing system of claim 20, wherein when the matching score exceeds the matching threshold, the computer program instructions are further configured to cause the at least one processor to:

determine labels in the source that have corresponding values and have not been previously matched to labels in the target;
determine labels in the target that have associated empty fields; and
for each unmatched label in the source having a corresponding value:

run the unmatched label in the source and each unmatched label from the target through the semantic matching AI/ML model in pairs until the semantic matching AI/ML model outputs a matching score that meets or exceeds an automatic identification threshold, and
enter a value corresponding to a label from the source for the pair associated with the matching score into a field associate with an associated label of the pair from the target.

27. The computing system of claim 26, wherein the automatic identification threshold is higher than the matching threshold.

28. The computing system of claim 20, wherein the validation is repeated until at the matching score for at least one additional match meets or exceeds the matching threshold.

# FIG. 1

100

# FIG. 2

200

250

Assistant /
Chatbot

UNATTENDED
ROBOT

210

220

230

234

EXECUTE

DEPLOY

Robot(s)

AUTOMATE

</mainframe>

</web>

</VM>

</enterprise app>

</desktop app>

Designer

Conductor    MONITOR

232

240

260

ATTENDED
ROBOT

Core Hyper-
Automation
System

Data
Labeling

# FIG. 3

300

330   320

310   312   316

Listener   Browser   314   Executor   Designer

**Client Side**

Agent(s)

342   Web Application (HTML/JS)

**Presentation Layer**

346

Conf.   Log   Mon.   Queues   Conf.   Log   Mon.   Queues

344   OData REST API Endpoints   Notification and Mon. API   340

**Service Layer**

API Implementation / Business Logic

348

**Persistence Layer**

Database Server   AI/ML Server   Indexer Server

**Server Side**   350   360   370

# FIG. 4

400

Designer

410

420 — User-Defined Activities

430 — API-Driven Acivities

440 — AI/ML Activities

UI Automation Activities

460 — Drivers

450

470 — APIs

480 — AI/ML Models

460

OS — 462

Browser — 464

VM — 466

Enterprise — 468

# FIG. 5

500

# FIG. 6A

# FIG. 6B

# FIG. 7

700

# FIG. 8A

800

810

820

| Create/Edit Invoice Recipients | | Billing System | |
|---|---|---|---|
| Company: | UiPath, Inc. | Cust. Num.: | |
| Recipient: | Taco Tuesday, Inc. | Vendor: | |
| Address: | 123 Main Street | Address: | |
| City: | Alexandria | Address 2: | |
| State: | Virginia | City: | |
| Zip: | 22314 | State: | |
| Amount: | 45,000.00 | Postal Code: | |
| Currency: | | Country | |
| Invoice #: | 12345A | Total Due: | |
| Cust. Code: | 123456789 | Inv. Num.: | |

App 1   Brows

App 2

App 3

Save  Cancel

Save  Exit

∧  UI  1:23pm

840

830

# FIG. 8B

800

810 820

**Create/Edit Invoice Recipients**

| | |
|---|---|
| App 1 | Brows |
| App 2 | |
| App 3 | |

| Create/Edit Invoice Recipients | |
|---|---|
| Company: | UiPath, Inc. |
| Recipient: | Taco Tuesday, Inc. |
| Address: | 123 Main Street |
| City: | Alexandria |
| State: | Virginia |
| Zip: | 22314 |
| Amount: | 45,000.00 |
| Currency: | |
| Invoice #: | 12345A |
| Cust. Code: | 123456789 |

Save  Cancel

| Billing System | |
|---|---|
| Cust. Num.: | 123456789 |
| Vendor: | |
| Address: | |
| Address 2: | |
| City: | |
| State: | |
| Postal Code: | |
| Country | |
| Total Due: | |
| Inv. Num.: | |

Save  Exit

∧  UI  1:23pm

840 830

# FIG. 8C

800

810                                              820

Create/Edit Invoice Recipients

Billing System

App 1    Brows

Company:    UiPath, Inc.

Cust. Num.:    123456789

Recipient:    Taco Tuesday, Inc.

Vendor:

App 2

Address:    123 Mai

Copy-and-Paste Detected?

City:    Alexandr

A copy-and-paste data entry operation
appears to be occurring. Would you
like UiPath to automatically complete
this operation?

State:    Virginia

App 3

Zip:    22314

Amount:    45,000.0

Yes

Currency:

No

Invoice #:    12345A

Cust. Code:    123456789

Inv. Num.:

Save    Cancel

Save    Exit

^ Ui 1:23pm

840

850

830

# FIG. 8D

800

810                                    820

**Create/Edit Invoice Recipients**

| | |
|---|---|
| Company: | UiPath, Inc. |
| Recipient: | Taco |
| Address: | 123 M |
| City: | Alexar |
| State: | Virgini |
| Zip: | 22314 |
| Amount: | 45,000 |
| Currency: | |
| Invoice #: | 12345A |
| Cust. Code: | 123456789 |

Save   Cancel

App 1   Brows

App 2

App 3

**Ui   Match not Found**

A match was not found for the label "Invoice #". Please click the matching field in the target.

Close

**Billing System**

| | |
|---|---|
| Cust. Num.: | 123456789 |
| | Taco Tuesday, Inc. |
| | 123 Main Street |
| | |
| | Alexandria |
| | Virginia |
| | 22314 |
| Country | USA |
| Total Due: | 45,000.00 |
| Inv. Num.: | |

Save   Exit

∧  Ui  1:23pm

860

840                                    830

812

# FIG. 8E

800

810

820

**Create/Edit Invoice Recipients**

| | |
|---|---|
| App 1 | Brows |

Company: UiPath, Inc.

Recipient: Taco Tuesday, Inc.

App 2

Address: 123 Main Street

City: Alexandria

State: Virginia

App 3

Zip: 22314

Amount: 45,000.00

Currency:

Invoice #: 12345A

Cust. Code: 123456789

Save  Cancel

**Billing System**

Cust. Num.: 123456789

Vendor: Taco Tuesday, Inc.

Address: 123 Main Street

Address 2:

City: Alexandria

State: Virginia

Postal Code: 22314

Country USA

Total Due: 45,000.00

Inv. Num.: 12345A

Save  Exit

∧  UI  1:23pm

840

830

# FIG. 8F

800

810

820

Create/Edit Invoice Recipients

| | |
|---|---|
| Company: | UiPath, Inc. |
| Recipient: | Taco Tuesday, Inc. |
| Address: | 123 Mai |
| City: | Alexandr |
| State: | Virginia |
| Zip: | 22314 |
| Amount: | 45,000.0 |
| Currency: | |
| Invoice #: | 12345A |
| Cust. Code: | 123456789 |

Save  Cancel

Billing System

| | |
|---|---|
| Cust. Num.: | 123456789 |
| Vendor: | Taco Tuesday, Inc. |
| | 23 Main Street |
| | lexandria |
| | /irginia |
| | 2314 |
| | JSA |
| | 5,000.00 |
| Inv. Num.: | 12345A |

Save  Exit

App 1   Brows

App 2

App 3

Ui   Automate Copy-and-Paste?

Would you like UiPath to provide an
RPA automation for this task?

Yes

No

Λ  Ui  1:23pm

840

870

830

# FIG. 8G

800

810

820

| Create/Edit Invoice Recipients | | Billing System | |
|---|---|---|---|
| Company: | UiPath, Inc. | Cust. Num.: | |
| Recipient: | Taco Tuesday, Inc. | Vendor: | |
| Address: | 123 Main Street | Address: | |
| City: | Alexandria | Address 2: | |
| State: | Virginia | City: | |
| Zip: | 22314 | State: | |
| Amount: | 45,000.00 | Postal Co | |
| Currency: | | Country | |
| Invoice #: | 12345A | Total Due | |
| Cust. Code: | 123456789 | Inv. Num. | |

App 1  Brows

App 2

App 3

Save  Cancel

Robots  X

Robot 1

Robot 2

Auto Copy-and-Paste

Exit

1:23pm

880  882  830

# FIG. 9

900

910

# FIG. 10

1000

Task Mining — 1010

1030

Detection — 1020

SM

Auto-
Completion — 1040

Automation — 1050

# FIG. 11

1100

```
        ( START )
            │
            ▼
┌───────────────────────┐
│   Perform Task Mining  │───── 1105
└───────────────────────┘
            │
            ▼
┌───────────────────────┐
│  Train and Deploy AI/ML│───── 1110
│         Model          │◄─────────────────────────┐
└───────────────────────┘                           │
            │                                        │
            ▼                                        │
┌───────────────────────┐                           │
│  Observe User Interactions│─── 1115                │
│  with Computing System │◄──┐                       │
└───────────────────────┘   │                       │
            │               │                       │
            ▼               │                       │
┌───────────────────────┐   │                       │
│   Compare Labels from  │── 1120                    │
│  Source and Target when│                           │
│     Value Matches      │                           │
└───────────────────────┘                           │
            │          NO   │            ┌───────────────────────┐
            ▼               │      1140──│ Store Training Data from│
         ◇ Match ◇──────────┘            │   Source and Target    │
         ◇ Found? ◇  1125                 └───────────────────────┘
            │                                        ▲
           YES                                       │
            ▼                            ┌───────────────────────┐
┌───────────────────────┐        1135──│ Generate and Deploy    │
│ Perform Semantic Copy- │────────────►│     Automation         │
│      and-Paste         │             └───────────────────────┘
└───────────────────────┘
            │
          1130
```

Europäisches
Patentamt

European
Patent Office

Office européen
des brevets

# EUROPEAN SEARCH REPORT

**Application Number**

EP 24 15 0181

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/325016 A1 (NICHOLSON JOHN WELDON [US] ET AL) 24 October 2019 (2019-10-24) * paragraph [0038] - paragraph [0040] * * paragraph [0049] * * paragraph [0057] * * paragraph [0077] * ----- | 1-28 | INV. G06F40/174 G06F40/30 G06N20/00 |
| A | US 6 499 041 B1 (BRESLAU FRANKLIN CHARLES [US] ET AL) 24 December 2002 (2002-12-24) * the whole document * ----- | 1-28 | |
| A | US 10 713 625 B2 (SAP SE [DE]) 14 July 2020 (2020-07-14) * the whole document * ----- | 1-28 | |
| A | US 2007/256005 A1 (SCHNEIDER JAMES E [US] ET AL) 1 November 2007 (2007-11-01) * the whole document * ----- | 1-28 | |

**TECHNICAL FIELDS SEARCHED (IPC)**

G06F
G06N

The present search report has been drawn up for all claims

| Place of search | Date of completion of the search | Examiner |
|---|---|---|
| Berlin | 23 May 2024 | Abram, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

**EP 4 398 142 A1**

## ANNEX TO THE EUROPEAN SEARCH REPORT
## ON EUROPEAN PATENT APPLICATION NO.

EP 24 15 0181

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2024

| Patent document cited in search report | | Publication date | Patent family member(s) | | Publication date |
|---|---|---|---|---|---|
| US 2019325016 | A1 | 24-10-2019 | NONE | | |
| US 6499041 | B1 | 24-12-2002 | NONE | | |
| US 10713625 | B2 | 14-07-2020 | US 2018095651 A1<br>US 2019073636 A1 | | 05-04-2018<br>07-03-2019 |
| US 2007256005 | A1 | 01-11-2007 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10860905 B
- US 20220011732
- US 11080548 B
- US 10936351 B
- US 11200073 B